(19) Europäisches Patentamt
European Patent Office
Office européen des brevets

(11) **EP 4 203 224 B1**

(12) **FASCICULE DE BREVET EUROPEEN**

(45) Date de publication et mention
de la délivrance du brevet:
**26.11.2025 Bulletin 2025/48**

(21) Numéro de dépôt: **22214426.3**

(22) Date de dépôt: **19.12.2022**

(51) Classification Internationale des Brevets (IPC):
*H02J 13/00* (2006.01)  *H02J 3/08* (2006.01)
*H02J 3/38* (2006.01)  *H02J 3/40* (2006.01)
*H02J 7/00* (2006.01)  *H02J 7/35* (2006.01)
*H02J 9/06* (2006.01)

(52) Classification Coopérative des Brevets (CPC):
**H02J 7/35; H02J 3/381; H02J 3/40; H02J 7/00712;
H02J 13/00004; H02J 13/00022;** H02J 7/0013;
H02J 9/066; H02J 13/00028; H02J 2300/24;
H02J 2310/10; Y02E 10/56

(54) **SYNCHRONISATION ENTRE MINI-RESEAUX**

SYNCHRONISATION ZWISCHEN MININETZEN

SYNCHRONIZATION BETWEEN MINI-NETWORKS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **23.12.2021 FR 2114410**

(43) Date de publication de la demande:
**28.06.2023 Bulletin 2023/26**

(73) Titulaire: **SAGEMCOM ENERGY & TELECOM SAS
92270 Bois-Colombes (FR)**

(72) Inventeurs:
• **BOUKHARI, Kevin
BOIS-COLOMBES 92270 (FR)**
• **ALNEJAILI, Tareq
BOIS-COLOMBES 92270 (FR)**

(74) Mandataire: **Cabinet Boettcher
5, rue de Vienne
75008 Paris (FR)**

(56) Documents cités:
**EP-A1- 3 726 698       WO-A1-2013/182230
US-A1- 2011 267 854**

**Description**

L'invention concerne le domaine des mini-réseaux électriques, plus communément appelés « mini-grids ».

ARRIERE PLAN DE L'INVENTION

On assiste aujourd'hui, dans certains pays où le taux d'ensoleillement est important et où le réseau électrique traditionnel n'est pas accessible sur l'ensemble du territoire, au développement de « mini-grids », que l'on peut traduire par « mini-réseaux électriques ».

Les mini-grids sont de petites centrales électriques alimentant des réseaux de distribution locaux de faible puissance desservant des agglomérations spécifiques (comprenant typiquement entre quelques dizaines à quelques milliers d'abonnés), qui peuvent être hors réseau ou interconnectées au réseau central.

Les mini-grids sont généralement déployés dans les zones rurales avec une densité de population plus élevée pour fournir une alimentation alternative fiable. Un mini-grid comporte classiquement un ou des champs solaires photovoltaïques (comprenant chacun plusieurs panneaux photovoltaïques connectés en série et en parallèle), une ou des batteries pour stocker l'énergie électrique produite à partir de l'énergie solaire, et un ou des convertisseurs de puissance destinés à convertir l'énergie électrique pour produire une alimentation alternative sous une tension adaptée au réseau. Certains mini-grids dits « hybrides » intègrent en outre un groupe électrogène. Le groupe électrogène est notamment utilisé la nuit, lorsque la charge des batteries à la tombée du jour est insuffisante pour subvenir aux besoins des abonnés pendant la nuit.

L'interconnexion des mini-grids isolés permet d'améliorer de manière importante les performances, la fiabilité et la disponibilité de ces mini-grids. Les mini-grids peuvent ainsi échanger de l'énergie, de sorte qu'un mini-grid, disposant d'un surplus d'énergie, peut alimenter un mini-grid qui a un déficit énergétique. Le surplus d'énergie d'un mini-grid peut par exemple être utilisé pour charger la batterie d'un autre mini-grid. On optimise de la sorte la durée de vie des batteries et l'exploitation de l'énergie globalement disponible sur le réseau, et on limite donc les délestages ainsi que l'utilisation des groupes électrogènes dont le fonctionnement nécessite du carburant et est donc très coûteux.

Cependant, la connexion sur un même bus AC de différentes sources de tension nécessite impérativement que ces dernières soient parfaitement synchronisées en fréquence et en tension, sous peine de voir circuler, dans les câbles de puissance les reliant, des sur-courants importants pouvant endommager les matériels et faire déclencher les protections.

Une méthode connue pour synchroniser entre eux des convertisseurs de puissance utilise une stratégie « master/slave ». Cette méthode nécessite l'échange en « temps réel » des informations de fréquence et de tension entre le convertisseur maître et ses esclaves sur un bus filaire de communication (de type CAN ou RS485). Une liaison de communication rapide est en effet nécessaire pour gérer rapidement le flux de puissance.

Cette méthode pose les problèmes suivants.

Tout d'abord, la perte du « maître » entraîne un *black-out* plus ou moins temporaire du réseau global formé par ces mini-grids interconnectés. Le réseau global est donc peu robuste.

D'autre part, comme les convertisseurs sont éloignés les uns des autres, il est nécessaire d'utiliser de très longs câbles de communication pour les connecter entre eux. Or, de tels câbles sont bien évidemment très coûteux et complexes à installer.

Le document EP 3 726 698 A1 dévoile un système électrique destiné à alimenter un abonné. Le système électrique comprend une pluralité de convertisseurs, chaque convertisseur étant connecté à au moins un panneau photovoltaïque ou bien à au moins une batterie.

OBJET DE L'INVENTION

L'invention a pour objet de synchroniser et de connecter entre eux plusieurs mini-grids éloignés les uns des autres, de manière à obtenir un réseau global robuste, et sans nécessiter de câbles de communication de longueur importante.

RESUME DE L'INVENTION

En vue de la réalisation de ce but, on propose un procédé de synchronisation, mis en œuvre dans un système de convertisseurs qui comporte une pluralité de groupes de convertisseurs, chaque groupe de convertisseurs comprenant un ou des convertisseurs regroupés localement, chaque convertisseur étant connecté à au moins un panneau photovoltaïque et à au moins une batterie pour alimenter au moins un abonné, les convertisseurs comprenant tous une sortie reliée à un même bus de puissance, de sorte que les groupes de convertisseurs sont connectés parallèlement entre eux en étant reliés audit bus de puissance, chaque groupe de convertisseurs comprenant au moins un module de communication radiofréquence pour communiquer avec les autres groupes de convertisseurs, le procédé de synchronisation comprenant les étapes de :

- faire échanger régulièrement par les groupes de convertisseurs, en utilisant les modules de communication radiofréquence, des valeurs d'au moins un paramètre de fonctionnement global associées chacune à un groupe de convertisseurs distinct ;
- définir dynamiquement et en temps réel un groupe de convertisseurs maître à partir de ces valeurs du paramètre de fonctionnement global ;
- acquérir un paramètre de configuration, représentatif d'une configuration de connexion dans laquelle se trouve le système de convertisseurs et qui dépend d'au moins une source de puissance externe susceptible d'être connectée au système de convertisseurs, et d'un type de ladite source de puissance externe ;
- faire mettre en œuvre, par le groupe de convertisseurs maître, un algorithme de contrôle global permettant de synchroniser entre eux et de gérer des flux de puissance globaux entre les groupes de convertisseurs, l'algorithme de contrôle global étant défini en fonction du paramètre de configuration.

Les groupes de convertisseurs (ou « clusters ») sont donc connectés en parallèle sur un même bus de puissance.

Le procédé de synchronisation selon l'invention permet leur fonctionnement synchrone par la combinaison de plusieurs stratégies complémentaires qui dépendent des sources de puissance externes connectées au système de convertisseurs.

L'algorithme de contrôle global est ainsi adapté en fonction des sources de puissances externes connectées au système de convertisseurs : le procédé est donc efficace quelle que soit la configuration du réseau global comprenant le système de convertisseurs.

Le procédé de synchronisation selon l'invention ne nécessite pas de liaison filaire.

Chaque groupe de convertisseurs peut être le groupe de convertisseurs maître (arbitrage rotatif), de sorte que la perte d'un groupe ne peut pas conduire à la perte totale de l'alimentation.

La sélection du groupe de convertisseurs maître dépend du paramètre de fonctionnement global, dont la valeur est propre à chaque groupe de convertisseurs. Le paramètre de fonctionnement global est par exemple représentatif de l'état de charge des batteries du groupe de convertisseurs, ce qui garantit la disponibilité du groupe de convertisseurs maître, qui met en œuvre l'algorithme de contrôle global. Le système est ainsi très robuste.

On note de plus que le système de convertisseurs est facilement extensible. Il est en effet très simple de rajouter un groupe de convertisseurs, qu'il suffit de connecter sur le bus AC parallèlement aux autres. Le procédé de synchronisation est ainsi extrêmement flexible.

On propose de plus un procédé de synchronisation tel que précédemment décrit, dans lequel, pour chaque groupe de convertisseurs, le paramètre de fonctionnement global est un état de charge global représentatif des états de charge des batteries connectées aux convertisseurs dudit groupe de convertisseurs, le groupe de convertisseurs maître étant le groupe de convertisseurs qui est associé à une valeur maximale des états de charge globaux.

On propose de plus un procédé de synchronisation tel que précédemment décrit, comprenant en outre l'étape, pour chaque groupe de convertisseurs, de :

- définir dynamiquement et en temps réel un convertisseur maître local dudit groupe de convertisseurs à partir de valeurs d'au moins un paramètre de fonctionnement local associées chacune à un convertisseur distinct dudit groupe de convertisseurs ;
- faire mettre en œuvre, par le convertisseur maître local, un algorithme de contrôle local permettant de synchroniser entre eux et de gérer des flux de puissance locaux entre les convertisseurs dudit groupe de convertisseurs.

On propose de plus un procédé de synchronisation tel que précédemment décrit, dans lequel l'algorithme de contrôle global est mis en œuvre par le convertisseur maître local du groupe de convertisseurs maître.

On propose de plus un procédé de synchronisation tel que précédemment décrit, dans lequel, pour chaque convertisseur, le paramètre de fonctionnement local est un état de charge de la batterie connectée audit convertisseur, le convertisseur maître local dudit groupe de convertisseurs étant le convertisseur qui est associé à une valeur maximale des états de charge.

On propose de plus un procédé de synchronisation tel que précédemment décrit, dans lequel, lorsque la configuration de connexion est une première configuration de connexion dans laquelle aucune source de puissance externe n'est connectée au système de convertisseurs, l'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, déconnecter le système de convertisseurs des abonnés.

On propose de plus un procédé de synchronisation tel que précédemment décrit, dans lequel, lorsque la configuration de connexion est une deuxième configuration de connexion dans laquelle un groupe électrogène peut être connecté à un groupe de convertisseurs particulier, l'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, utiliser une puissance externe fournie par le générateur électrogène en synchronisant des sorties des convertisseurs sur une tension externe produite par le groupe électrogène, puis, lorsque les batteries sont rechargées, déconnecter le groupe de convertisseurs particulier du groupe électrogène et piloter les convertisseurs en utilisant une régulation par statisme.

On propose de plus un procédé de synchronisation tel que précédemment décrit, dans lequel, lorsque la configuration de connexion est une troisième configuration de connexion dans laquelle un réseau de puissance externe ou un groupe électrogène peut être connecté à un groupe de convertisseurs particulier, ou une quatrième configuration de connexion dans laquelle un réseau de puissance externe ou un groupe électrogène peut être connecté à un groupe de convertisseurs particulier, et un onduleur photovoltaïque peut être connecté au bus de puissance, l'algorithme de contrôle global comprend les étapes de :

- déterminer si la valeur maximale des états de charge globaux est inférieure ou égale à un seuil minimal et, si c'est le cas :

  - si le groupe électrogène est connecté au groupe de convertisseurs particulier, utiliser une première puissance externe fournie par le générateur électrogène en synchronisant des sorties des convertisseurs sur une première tension externe produite par le groupe électrogène puis, lorsque les batteries sont rechargées, déconnecter le groupe de convertisseurs particulier du groupe électrogène et piloter les convertisseurs en utilisant une régulation par statisme ;
  - si le groupe électrogène n'est pas connecté au groupe de convertisseurs mais que le réseau de puissance externe est connecté au groupe de convertisseurs particulier, utiliser une deuxième puissance externe fournie par le réseau de puissance externe en synchronisant des sorties des convertisseurs sur une deuxième tension externe produite par le réseau de puissance externe.

On propose de plus un procédé de synchronisation tel que précédemment décrit, dans lequel l'algorithme de contrôle global comprend en outre les étapes, si la valeur maximale des états de charge globaux est supérieure au seuil minimal, de déterminer si la valeur maximale des états de charge globaux est supérieure ou égale à un seuil maximal et :

- si ce n'est pas le cas, de piloter les convertisseurs en utilisant la régulation prédéfinie ;
- si c'est le cas, et si le réseau de puissance externe est connecté au groupe de convertisseurs particulier, d'injecter un surplus d'énergie provenant des batteries dans le réseau de puissance externe.

On propose de plus un procédé de synchronisation tel que précédemment décrit, dans lequel, si aucun onduleur photovoltaïque n'est connecté au bus de puissance, la régulation prédéfinie est une régulation par statisme, et, si un onduleur photovoltaïque est connecté au bus de puissance, la régulation prédéfinie est une régulation utilisant un contrôle par décalage de fréquence.

On propose de plus un procédé de synchronisation tel que précédemment décrit, dans lequel les coefficients n et m utilisés pour la régulation par statisme sont tels que :

- si une impédance de sortie des convertisseurs est purement résistive, on a :

$$n = \frac{V_{max} - V_{min}}{P_{max} - P_{min}},$$

$$m = \frac{f_{max} - f_{min}}{Q_{max} - Q_{min}},$$

- si une impédance de sortie des convertisseurs est purement inductive, on a :

$$n = \frac{V_{max} - V_{min}}{Q_{max} - Q_{min}},$$

$$m = \frac{f_{max} - f_{min}}{P_{max} - P_{min}},$$

où $V_{max}$ est une tension maximale admissible en sortie des convertisseurs, $V_{min}$ est une tension minimale admissible, $P_{max}$ est une puissance active maximale admissible, $P_{min}$ est une puissance active minimale admissible, $f_{max}$ est une fréquence maximale admissible, $f_{min}$ est une fréquence minimale admissible, $Q_{max}$ est une puissance réactive maximale admissible, $Q_{min}$ est une puissance réactive minimale admissible.

On propose de plus un convertisseur comprenant une unité de traitement dans laquelle est mis en œuvre le procédé de synchronisation tel que précédemment décrit.

On propose de plus un programme d'ordinateur comprenant des instructions qui conduisent l'unité de traitement du convertisseur tel que précédemment décrit à exécuter les étapes du procédé de synchronisation tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un convertisseur (SGC) ;
[Fig. 2] la figure 2 représente un groupe de convertisseurs ;
[Fig. 3] la figure 3 représente un système de convertisseurs ;
[Fig. 4] la figure 4 représente des groupes de convertisseurs communiquant entre eux via des modules de communication radiofréquence ;
[Fig. 5] la figure 5 représente deux groupes de convertisseurs et les paramètres échangés ;
[Fig. 6] la figure 6 représente les paramètres échangés au sein d'un convertisseur ;
[Fig. 7] la figure 7 représente des étapes d'un algorithme de configuration générale ;
[Fig. 8] la figure 8 représente des étapes d'un algorithme de sélection du groupe de convertisseurs maître ;
[Fig. 9] la figure 9 représente des étapes d'un algorithme de synchronisation ;
[Fig. 10] la figure 10 représente des étapes d'un algorithme de détection ;
[Fig. 11] la figure 11 représente des étapes d'un algorithme de calcul de l'état de charge global d'un groupe de convertisseurs ;
[Fig. 12] la figure 12 représente des étapes d'un algorithme de de protection ;
[Fig. 13] la figure 13 représente des graphiques comprenant des droites représentant des fonctions linéaires $w^*$ en fonction de P et $E^*$ en fonction de Q, lors de la mise en œuvre d'une régulation par statisme, dans le cas d'une impédance de sortie inductive ;
[Fig. 14] la figure 14 représente des graphiques comprenant des droites représentant des fonctions linéaires $E^*$ en fonction de P et $w^*$ en fonction de Q, lors de la mise en œuvre d'une régulation par statisme, dans le cas d'une impédance de sortie résistive ;
[Fig. 15] la figure 15 représente des graphiques montrant les coefficients de statisme dans le cas d'une impédance de sortie résistive ;
[Fig. 16] la figure 16 représente des étapes de l'algorithme de contrôle global utilisé dans la première configuration de connexion ;
[Fig. 17] la figure 17 représente des échanges de puissance dans la première configuration de connexion ;
[Fig. 18] la figure 18 représente des étapes de l'algorithme de contrôle global utilisé dans la deuxième configuration de connexion ;
[Fig. 19] la figure 19 représente des échanges de puissance dans la deuxième configuration de connexion ;
[Fig. 20] la figure 20 représente des étapes de l'algorithme de contrôle global utilisé dans la troisième configuration de connexion ;
[Fig. 21] la figure 21 représente des échanges de puissance dans la troisième configuration de connexion ;
[Fig. 22] la figure 22 représente des étapes de l'algorithme de contrôle global utilisé dans la quatrième configuration de connexion ;

[Fig. 23] la figure 23 représente des échanges de puissance dans la quatrième configuration de connexion ;

[Fig. 24] la figure 24 représente des étapes d'un algorithme de contrôle local mis en œuvre par un convertisseur maître local ;

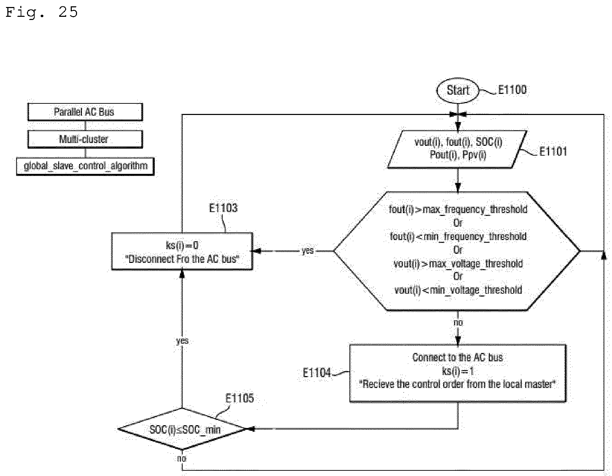

[Fig. 25] la figure 25 représente des étapes d'un algorithme de contrôle esclave mis en œuvre par un convertisseur esclave

## DESCRIPTION DETAILLEE DE L'INVENTION

L'invention est ici mise en œuvre dans un système de convertisseurs.

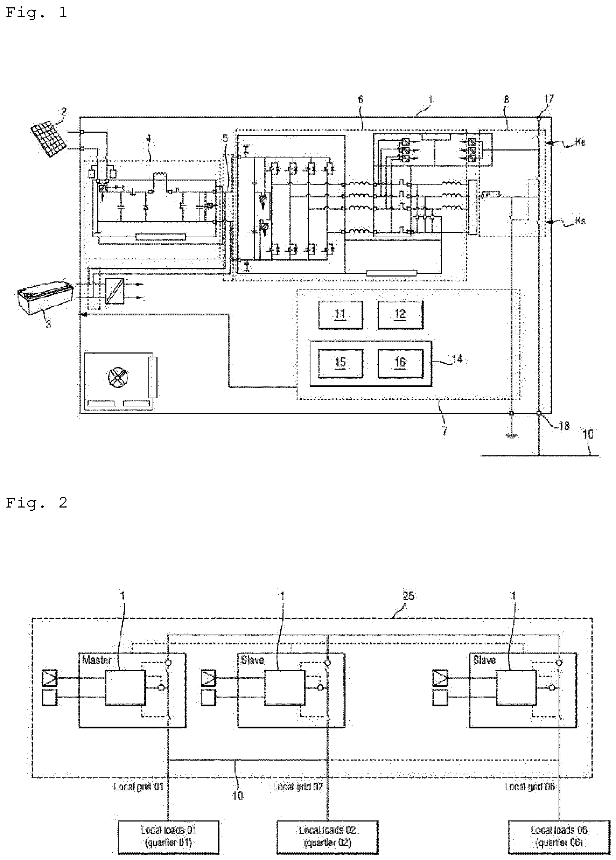

En référence à la figure 1, chaque convertisseur est ici semblable au convertisseur 1, qui est appelé « SGC » (pour « Smart Grid Converter »). Le convertisseur 1 appartient à un mini-grid qui comprend, outre le convertisseur 1, au moins un champ photovoltaïque comprenant chacun un ou plusieurs panneaux photovoltaïques 2 connectés en série et en parallèle et au moins une batterie 3, auxquels est relié le convertisseur 1 en opération.

La batterie 3 est une batterie haute tension destinée à stocker de l'énergie qui est utilisée par exemple pour alimenter les abonnés la nuit.

Le convertisseur 1 est un convertisseur hybride.

Le convertisseur 1 comporte une unité de conversion DC-DC 4, un bus DC 5, une unité de conversion DC-AC 6, une unité de traitement 7 et une cellule de protection 8.

L'unité de conversion DC-DC 4 comprend ici un hacheur solaire.

L'unité de conversion DC-DC 4 génère donc un courant continu sous une tension continue, qui est appliquée sur le bus DC 5, qui est ici un bus 600-900V (couplage DC).

La tension continue est appliquée en entrée de l'unité de conversion DC-AC 6. L'unité de conversion DC-AC 6 comprend un onduleur réversible à deux niveaux. Le premier niveau comprend des composants semi-conducteurs de type SiC (carbure de silicium).

L'unité de conversion DC-AC 6 génère une tension de sortie alternative qui est appliquée sur un bus de puissance AC 10.

L'unité de traitement 7 est une unité électronique et logicielle, qui comprend une ou plusieurs cartes électriques et un certain nombre de composants.

Parmi ces composants, on trouve un ou des composants de traitement 11, qui comprennent par exemple un microcontrôleur, un processeur classique, un GPU (pour *Graphics Processing Unit,* que l'on peut traduire par « processeur graphique »), un DSP (pour *Digital Signal Processor,* que l'on peut traduire par « processeur de signal numérique »), ou bien un circuit logique programmable tel qu'un FPGA (pour *Field Programmable Gate Arrays*) ou un ASIC (pour *Application Specific Integrated Circuit*).

L'unité de traitement 7 comprend aussi au moins une mémoire 12 reliée aux composants de traitement 11 et permettant notamment de stocker les instructions de programmes. En particulier, la mémoire forme un support d'enregistrement lisible par ordinateur, sur lequel est enregistré un programme d'ordinateur comprenant des instructions qui conduisent l'unité de traitement à exécuter les étapes du procédé de synchronisation selon l'invention.

L'unité de traitement 7 pilote l'unité de conversion DC-DC 4 pour mettre en œuvre une régulation MPPT (pour *« Maximum Power Point Tracking »*) et une gestion du stockage d'énergie dans la batterie 3.

L'unité de traitement 7 comporte aussi des moyens de communication 14, qui comprennent des moyens de communication filaires 15 (par exemple RS485 et/ou CAN et/ou Ethernet) et un module de communication radiofréquence 16 (sans fil).

Le convertisseur 1 comprend de plus une entrée 17 et une sortie 18.

L'entrée 17 peut être connectée à une sortie d'une source de puissance externe, par exemple à un groupe électrogène ou à un réseau de puissance externe (réseau public).

La sortie 18 est reliée au bus de puissance AC 10.

La cellule de protection 8 permet de protéger le convertisseur 1 de défauts susceptibles de provenir d'une source de puissance externe ou du bus AC 10.

Le convertisseur 1 comprend de plus un contacteur d'entrée Ke, permettant de sélectivement connecter ou déconnecter le convertisseur de la ou des sources externes auxquelles il est possiblement connecté, et un contacteur de sortie Ks, permettant de sélectivement connecter ou déconnecter le convertisseur 1 du bus AC 10 (et donc des abonnés). Le contacteur d'entrée Ke et le contacteur de sortie Ks sont pilotés par l'unité de traitement 7.

Le système de convertisseurs comprend donc une pluralité de convertisseurs semblables au convertisseur 1.

Ces convertisseurs 1 appartiennent à une pluralité de mini-grids, qui sont soit très proches, soit distants de plusieurs kilomètres voire même de plusieurs dizaines de kilomètres.

Certains des convertisseurs 1 sont donc très proches les uns des autres (quelques mètres ou dizaines de mètres) : ils alimentent par exemple des abonnés qui appartiennent à un même village, ou bien à un même quartier. Chaque convertisseur 1 peut créer indépendamment son réseau local et alimenter un quartier, ou bien il peut se

EP 4 203 224 B1

synchroniser avec d'autres convertisseurs 1 pour partager des charges locales.

Tous les convertisseurs 1 sont reliés au même bus AC 10, auquel sont aussi reliés les abonnés.

L'invention permet de synchroniser et de connecter à distance plusieurs groupes de convertisseurs (ou *clusters*), chaque groupe de convertisseurs comprenant un ou des convertisseurs 1 regroupés localement.

Par « regroupés localement », on entend que chaque groupe de convertisseurs comprend un ou des convertisseurs séparés les uns des autres d'une distance inférieure à un seuil de distance prédéfini, de l'ordre par exemple de la dizaine ou de la centaine de mètres.

Ici, par exemple, en référence à la figure 2, chaque groupe de convertisseurs 25 comprend six convertisseurs 1 qui sont donc connectés localement.

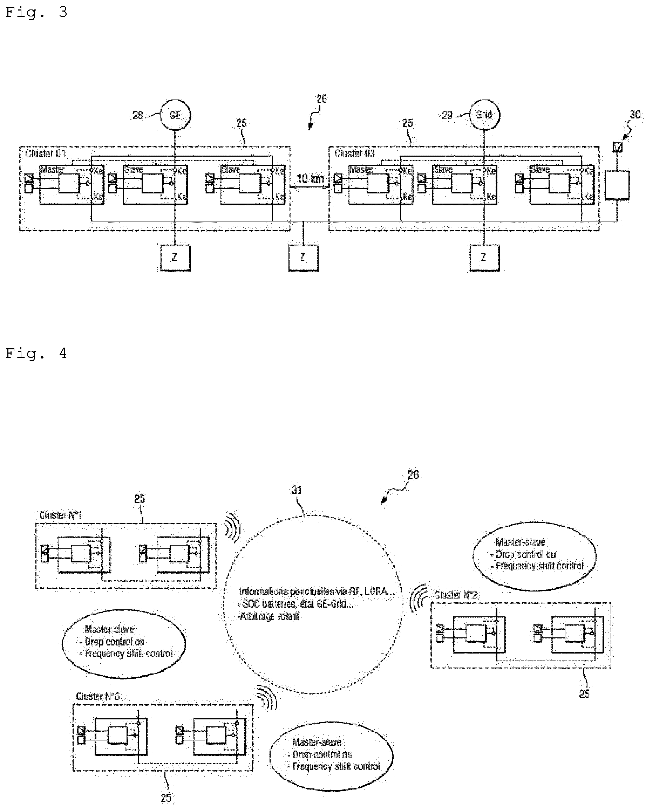

En référence à la figure 3, le système de convertisseurs 26 comporte par exemple trois groupes de convertisseurs 25, espacés par exemple de 10km.

Chaque groupe de convertisseurs 25 peut utiliser le surplus d'énergie des autres groupes de convertisseurs 25 pour charger ses batteries ou bien pour alimenter ses charges locales.

Les convertisseurs comprennent tous une sortie reliée au bus AC 10 (la sortie 18), de sorte que les groupes de convertisseurs sont connectés parallèlement entre eux en étant reliés audit bus AC 10, sur lequel chemine la puissance fournie aux abonnés et échangée entre les convertisseurs 1 et entre les groupes de convertisseurs 25.

Comme on l'a vu, une ou des sources externes peuvent être connectées au système de convertisseurs 26, et par exemple un ou des groupes électrogènes 28 connectés chacun à un groupe de convertisseurs particulier 25, et/ou un ou des réseaux de puissance externes 29 (réseaux publics) connectés chacun à un groupe de convertisseurs particulier 25. Un ou des onduleurs photovoltaïques 30 peuvent aussi être connectés au système de convertisseurs 26, en étant reliés au bus AC 10.

L'invention permet d'optimiser en temps réel la synchronisation et les échanges de puissance, en fonction non seulement des besoins des différents groupes de convertisseurs 25, mais aussi en fonction des sources externes connectées au système de convertisseurs 26.

Par « externes », on entend une source qui n'appartient pas au système de convertisseurs (et qui n'est ni un convertisseur 1, ni un panneau solaire, ni une batterie).

Cette optimisation utilise différents paramètres qui sont échangés entre les groupes de convertisseurs 25 en utilisant les modules de communication radiofréquence 16.

En référence à la figure 4, les groupes de convertisseurs 25 communiquent entre eux via un canal de transmission radiofréquence 31 et en utilisant par exemple le protocole LORA, qui est associé à un débit de communication relativement réduit.

L'invention permet de synchroniser les convertisseurs 1 des différents groupes de convertisseurs 25 en utilisant uniquement ce canal de transmission radiofréquence. La liaison filaire entre les groupes de convertisseurs 25 n'est pas nécessaire et n'est donc pas présente : les groupes de convertisseurs ne sont reliés par aucun câble dédié à la communication. Les paramètres échangés entre les groupes de convertisseurs 25, qui permettent de mettre en œuvre l'invention, ont une dynamique lente, et les échanges nécessaires requièrent une fréquence de communication entre les groupes de convertisseurs 25 relativement faible et compatible avec le LORA.

Par contre, à l'intérieur d'un même groupe de convertisseurs 25, la communication entre les convertisseurs 1 est assurée à l'aide d'une liaison filaire (par exemple en RS485 ou en CAN). Cette liaison filaire est nécessaire car la gestion du flux d'énergie au sein du groupe de convertisseurs 25 doit être traitée très rapidement. La fréquence de communication entre les convertisseurs 1 d'un même groupe de convertisseurs 25 sera donc plus élevée qu'entre les différents groupes de convertisseurs 25.

On fournit ci-dessous une nomenclature des sigles utilisés dans la suite de cette description, ainsi qu'une liste de paramètres et leur définition :

| Nomenclature | Définition |
|---|---|
| SGC | 'Smart grid converter' (convertisseur) |
| GE | Groupe Electrogène |
| MPPT | 'Maximum Power Point Tracking' |
| PV | Photovoltaïque |
| AC | 'Alternative current' |
| DC | 'Direct current' |

7

| Paramètre | Définition |
|---|---|
| SOC_max | Le seuil maximum de l'état de charge d'une batterie |
| SOC_min | Le seuil minimum de l'état de charge de la batterie |
| SOC_SEC | Le seuil de sécurité de l'état de charge de la batterie |
| GE_power_min | Le seuil de puissance minimum d'un GE |
| Vbat_inverse | La tension de la batterie qui permet d'activer la protection de puissance inverse de la batterie |
| f_grid_min | La fréquence minimale acceptée du réseau de ou d'un GE pour autoriser la synchronisation |
| f_grid_max | La fréquence maximale acceptée d'un réseau de puissance externe ou d'un GE pour autoriser la synchronisation |
| v_grid_min | La tension minimale acceptée du réseau de puissance externe ou d'un GE pour autoriser la synchronisation |
| v_grid_max | La tension maximale acceptée du réseau de puissance externe ou d'un GE pour autoriser la synchronisation |
| Inverse_flow_protection_limit | Une constante permet d'activer la protection contre les inversions de courant non contrôlées vers le réseau depuis la batterie |
| Voltage_synchronization_limit | La limite de tension entre la tension d'un groupe de convertisseurs et la tension d'entrée (GE ou réseau public) |
| Frequency_synchronization_limit | La limite de fréquence entre la tension d'un groupe de convertisseurs et la tension d'entrée (GE ou réseau de puissance externe) |
| Phase_ang_synchronization_limit | La limite de l'angle de phase entre la tension du groupe de convertisseurs et la tension d'entrée (GE ou réseau de puissance externe) |

| Nom de variable | Définition |
|---|---|
| SOC(i) | L'état de charge d'une batterie au temps i |
| SOC_cluster(i) | L'état de charge d'un groupe de convertisseurs |
| SOC_cluster_global(i) | L'état de charge du groupe de convertisseurs maître |
| Pbat(i) | La puissance de la batterie |
| Ppv(i) | La puissance du champ photovoltaïque |
| Pinv(i) | La puissance de sortie d'un convertisseur |
| Pin(i) | Le flux de puissance qui traverse de cellule de synchronisation d'entrée |
| Pref(i) | La référence de puissance qui peut être injectée ou absorbée par le convertisseur |
| Pself_consumption(i) | L'auto-consommation du convertisseur |
| ks_crt(i) | La commande du contacteur de sortie ks |
| ke_crt(i) | La commande du contacteur d'entrée ke |
| k_contact_GE(i) | Le contrôle du contact sec du GE |
| Grid_presence (i) | Paramètre indiquer la présence d'un réseau de puissance externe |
| SOC_cluster(i) | Paramètre indiquer la présence d'un GE |
| GE_connect(i) | Commande de synchronisation avec le réseau de puissance externe |
| Grid_connect(i) | Commande de synchronisation avec le GE |

(suite)

| Nom de variable | Définition |
|---|---|
| Grid former /follower_Frequency_shift_control_index | Commande d'activation de 'Grid former/follower_frequency shift control' |
| Droop_control_index | Commande d'activation de 'Droop control' |
| Control_index | Commande d'activation de mode 'inverter' ou mode 'rectifier' |
| Pin(i) | La fréquence de sortie d'un groupe de convertisseurs |
| v_ac_bus(i) | La tension de sortie du groupe de convertisseurs |
| Vbat(i) | La tension de la batterie |
| Vinv(i) | La tension de sortie du convertisseur (mode onduleur) |
| Vin(i) | La tension à l'entrée du convertisseur |
| Vout(i) | La tension à la sortie du convertisseur |
| angin(i) | L'angle de phase de la tension à l'entrée du convertisseur |
| angout(i) | L'angle de phase de la tension à la sortie du convertisseur |
| Phin(i) | La rotation de phase de la tension à l'entrée du convertisseur |
| Phout(i) | La rotation de phase de la tension à la sortie du convertisseur |
| fin(i) | La fréquence à l'entrée du convertisseur |
| fout(i) | La fréquence à La sortie du convertisseur |

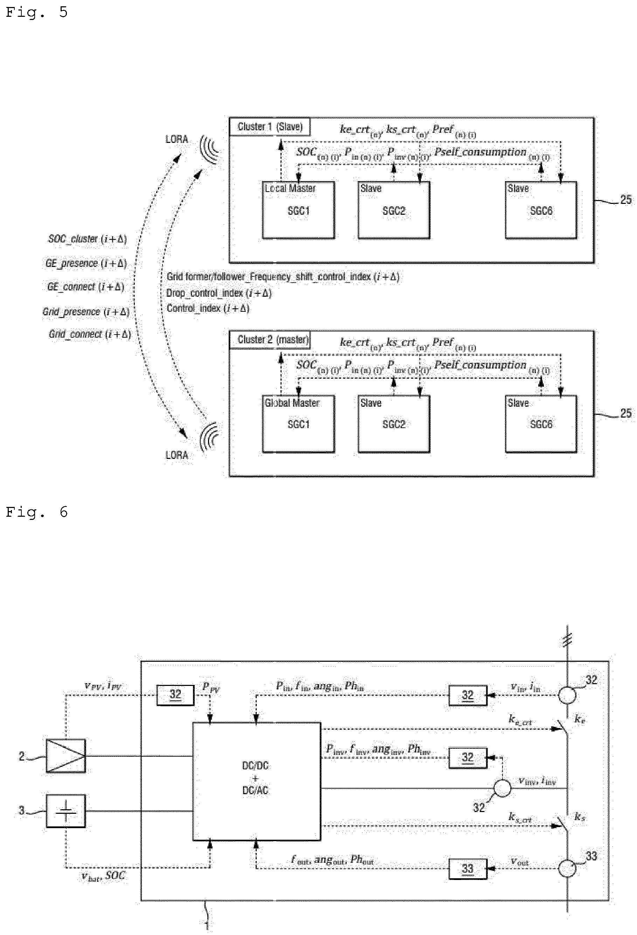

En référence à la figure 5, au sein d'un même groupe de convertisseurs 25 et pour chaque convertisseur n dudit groupe de convertisseurs (ici, on a six convertisseurs SGC1...SGC6 par groupe 25, donc n=6), les paramètres suivants sont échangés pour mettre en œuvre l'invention :
ke_crt(n), ks_crt(n), Pref(n)(i), SOC(n)(i), Pin(n)(i), Pinv(n)(i), Pself_consumption(n)(i).

Entre les groupes de convertisseurs 25, les paramètres suivants sont échangés :

SOC_cluster(i + Δ), GE_presence(i + Δ), GE_connect(i + Δ),
Grid_presence (i+Δ), Grid_connect(i+Δ),
Grid former/follower_Frequency_shift_control_index (i + Δ),
Droop_control_index (i + Δ), Control_index (i + Δ).

Δ correspond au temps d'échange entre l'émission d'un paramètre par un groupe de convertisseurs 25, et la réception dudit paramètre par un autre groupe de convertisseurs 25.

Les périodes de communication des paramètres échangés sont les suivantes :

| Paramètres échangés au sein du cluster | Période de communication |
|---|---|
| SOC | 1min |
| Pin | 20ms |
| Pinv | 20ms |
| Pself_consumption | 20ms |
| ks_crt | Ponctuel |
| ke_crt | Ponctuel |
| Pref | 20ms |
| Paramètres échangés entre clusters | Période de communication |
| SOC_cluster | 5 minutes |

(suite)

| Paramètres échangés entre clusters | Période de communication |
|---|---|
| GE_presence | Ponctuel |
| GE_connect | Ponctuel |
| Grid_presence | Ponctuel |
| Grid_connect | Ponctuel |
| Grid former /follower_Frequency_shift_control_index | Ponctuel |
| Droop_control_index | Ponctuel |
| Control_index | Ponctuel |

Les paramètres ci-dessus sont ainsi échangés pour mettre en œuvre l'invention au sein du système de convertisseurs 26 entre les groupes de convertisseurs 25, et au sein de chacun des groupes de convertisseurs 25.

En référence à la figure 6, chaque convertisseur 1 utilise ses capteurs d'entrée 32 et ses capteurs de sortie 33 pour acquérir les paramètres relatifs à son fonctionnement. Chaque convertisseur 1 utilise ces paramètres unitaires pour contrôler les différentes configurations de puissance qui vont être décrites.

On décrit maintenant plus précisément la mise en œuvre du procédé de synchronisation selon l'invention.

Le procédé de synchronisation selon l'invention est mis en œuvre grâce à un même logiciel téléchargé dans tous les convertisseurs 1 (plus précisément dans les mémoires 12 des unités de traitement 7 des convertisseurs 1).

Le procédé de synchronisation consiste à faire échanger régulièrement par les groupes de convertisseurs 25, en utilisant les modules de communication radiofréquence 16, des valeurs d'un paramètre de fonctionnement global, chaque valeur du paramètre de fonctionnement global étant associée à un groupe de convertisseurs 25 distinct.

Pour chaque groupe de convertisseurs 25, le paramètre de fonctionnement global est ici un état de charge global représentatif des états de charges des batteries 3 connectées aux convertisseurs 1 dudit groupe de convertisseurs 25.

Le procédé consiste ensuite à définir dynamiquement et en temps réel un groupe de convertisseurs maître à partir de ces valeurs du paramètre de fonctionnement global. Le rôle principal du groupe de convertisseurs maître est de contrôler la connexion des sources externes au réseau et de synchroniser et gérer les flux de puissance globaux entre les groupes de convertisseurs.

Le groupe de convertisseurs maître est ici le groupe de convertisseurs 25 qui est associé à la valeur maximale des états de charge globaux.

Ce critère de sélection augmente la fiabilité du système de convertisseurs 26 et augmente la stabilité du réseau intégrant le système de convertisseurs, car le groupe de convertisseurs maître a le maximum d'énergie stockée parmi les autres groupes de convertisseurs.

De même, à l'intérieur de chaque groupe de convertisseurs 25, un convertisseur maître local est défini.

Le convertisseur maître local est défini dynamiquement et en temps réel à partir de valeurs d'au moins un paramètre de fonctionnement local, chaque valeur du paramètre de fonctionnement local étant associée à un convertisseur 1 distinct dudit groupe de convertisseurs 25. Le paramètre de fonctionnement local est ici l'état de charge de la (ou des) batterie 3 reliée audit convertisseur 1.

Dans un groupe de convertisseurs 25, le convertisseur maître local est associé à une valeur maximale des états de charge.

Au sein de chaque groupe de convertisseurs, le convertisseur maître local met en œuvre un algorithme de contrôle local permettant de synchroniser entre eux et de gérer des flux de puissance locaux entre les convertisseurs dudit groupe de convertisseurs.

Le convertisseur maître local du groupe de convertisseurs maître est appelée convertisseur maître global.

C'est le convertisseur maître global qui pilote le procédé de synchronisation selon l'invention, et qui, notamment, met en œuvre un l'algorithme de contrôle global permettant de synchroniser entre eux et de gérer des flux de puissance globaux entre les groupes de convertisseurs 25.

Chaque convertisseur 1 du système de convertisseurs 26 héberge les différents algorithmes de contrôle. De cette façon, n'importe quel convertisseur peut jouer le rôle de maître local ou global (contrôle rotatif). La gestion du flux de puissance est ainsi extrêmement flexible et robuste.

On comprend donc que, à l'instant T, parmi les groupes de convertisseurs 25, il y a un unique groupe de convertisseurs maître. Il y a aussi un unique convertisseur maître dans chaque groupe de convertisseurs 25, le convertisseur maître étant appelé convertisseur maître global lorsqu'il appartient au groupe de convertisseurs maître, et convertisseur maître local sinon.

Le procédé consiste donc à faire mettre en œuvre, par le groupe de convertisseurs maître (et donc, plus précisément, par le convertisseur maître global), l'algorithme de contrôle global.

L'algorithme de contrôle global est défini en fonction d'un paramètre de configuration. Le paramètre de configuration est représentatif d'une configuration de connexion dans laquelle se trouve le système de convertisseurs, et qui dépend d'au moins une source de puissance externe susceptible d'être connectée au système de convertisseurs, et d'un type de ladite source de puissance externe.

Cela signifie que l'algorithme de contrôle global qui est utilisé diffère selon la configuration de connexion, qui elle-même dépend de la ou des sources externes pouvant être connectées au système 26, et du type desdites sources externes.

C'est l'utilisateur qui sélectionne la configuration de connexion et donc qui confère sa valeur au paramètre de connexion. L'utilisateur rentre cette valeur en communiquant avec les unités de traitement 7 des convertisseurs 1 (par exemple via une liaison filaire de type Ethernet).

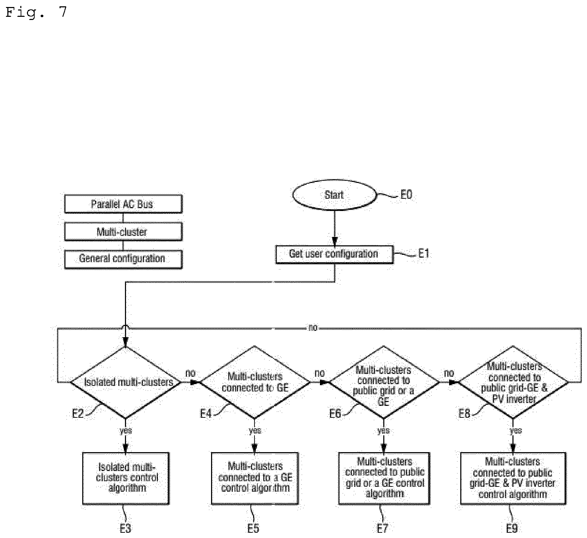

En référence à la figure 7, un algorithme de configuration générale est tout d'abord mis en œuvre. L'utilisateur peut ici sélectionner une configuration de connexion particulière parmi trois configurations de connexion, qui dépendent donc des sources externes possiblement connectées au système de convertisseurs 26. Les types de sources externes sont ici : groupe électrogène, réseau public, onduleur photovoltaïque.

L'algorithme de configuration général est mis en œuvre dans le convertisseur maître global.

Ainsi, suite à une étape de départ (étape E0), le convertisseur maître global acquiert un paramètre de configuration représentatif de la configuration de connexion particulière, qui a été renseigné par l'utilisateur (étape E1).

Si le paramètre de configuration correspond à la première configuration de connexion (étape E2), l'algorithme de contrôle global est défini en fonction de la première configuration de connexion (étape E3).

Sinon, si le paramètre de configuration correspond à la deuxième configuration de connexion (étape E4), l'algorithme de contrôle global est défini en fonction de la deuxième configuration de connexion (étape E5).

Sinon, si le paramètre de configuration correspond à la troisième configuration de connexion (étape E6), l'algorithme de contrôle global est défini en fonction de la troisième configuration de connexion (étape E7).

Sinon, si le paramètre de configuration correspond à la quatrième configuration de connexion (étape E8), l'algorithme de contrôle global est défini en fonction de la quatrième configuration de connexion (étape E9).

La première configuration de connexion est une configuration dans laquelle aucune source externe n'est connectée au système de convertisseurs 26.

La deuxième configuration de connexion est une configuration dans laquelle (au moins) un groupe électrogène peut être connecté à (au moins) un groupe de convertisseurs particulier.

La troisième configuration de connexion est une configuration dans laquelle (au moins) un réseau public ou (au moins) un groupe électrogène peut être connecté à (au moins) un groupe de convertisseurs particulier.

La quatrième configuration correspond au cas où (au moins) un réseau de puissance externe ou (au moins) un groupe électrogène peut être connecté à un groupe de convertisseurs particulier, et (au moins) un onduleur photovoltaïque peut être connecté au bus de puissance.

En fonction de la configuration de connexion, l'échange d'énergie sera régulé à l'aide d'une méthode de contrôle hybride qui bascule entre trois stratégies de contrôle :

- « Master / slave » : synchronisation maître/esclave en « temps réel »
- « Grid Former-Grid Follower/ frequency shift control »;
- « Droop control » : sources de tensions partageant des puissances selon des lois de « statismes ».

Dans le mode « Grid Former-Grid Follower », les convertisseurs fonctionnant en « source de courant » se synchronisent sur la fréquence de la tension qu'ils mesurent à leur sortie, et qui est imposée par un groupe électrogène 28 ou un réseau public 29.

Le « frequency shift control », c'est-à-dire le contrôle par décalage de fréquence, est une stratégie « Grid Former / Grid Follower » spécifique à la synchronisation aux onduleurs photovoltaïques externes 30 qui limitent leur puissance en fonction d'un niveau de fréquence sur une bande [50Hz-52Hz] imposé par le convertisseur « Grid Former » (le convertisseur maître global).

Le contrôle par décalage de fréquence est donc utilisé lorsqu'un onduleur photovoltaïque est connecté sur le bus 10.

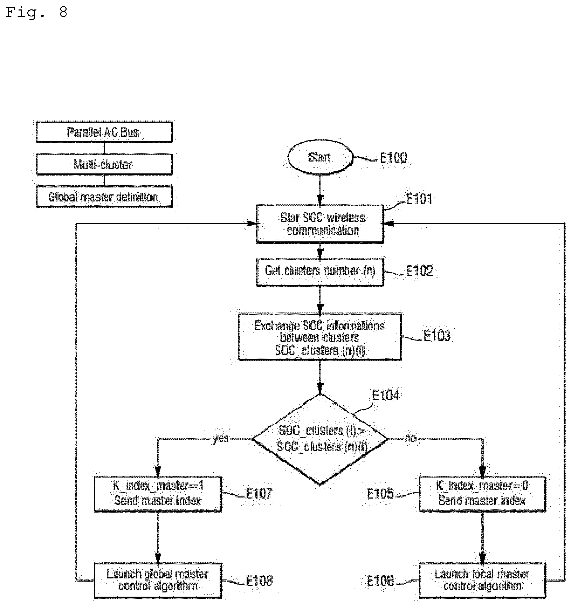

On décrit, en référence à la figure 8, un algorithme de sélection du groupe de convertisseurs maître, qui permet de définir dynamiquement le groupe de convertisseurs maître. L'algorithme est mis en œuvre dans chaque groupe de convertisseurs par le convertisseur maître local.

L'algorithme débute par une étape de départ (étape E100).

Le convertisseur maître local démarre une communication radiofréquence en utilisant son module de communication radiofréquence (étape E101), et acquiert le nombre de groupes de convertisseurs du système de convertisseurs (étape E102).

Le convertisseur maître local transmet l'état de charge global du groupe de convertisseurs et acquiert les états de charge globaux des autres groupes de convertisseurs (étape E103).

Le convertisseur maître local compare l'état de charge global de son groupe de convertisseurs 25 avec celui des autres groupes de convertisseurs 25, et vérifie si son état de charge global est supérieur à celui des autres groupes de convertisseurs (étape E104).

Si ce n'est pas le cas, la variable K_index_master est mise à 0, et le convertisseur maître local envoie la valeur de ladite variable aux autres groupes de convertisseurs 25 (étape E105). L'algorithme de contrôle local est alors lancé dans le groupe de convertisseurs (étape E106).

Si c'est le cas, la variable K_index_master est mise à 1, et le convertisseur maître envoie la valeur de ladite variable aux autres groupes de convertisseurs 25 (étape E107). Le groupe de convertisseurs en question est donc le groupe de convertisseurs maître ; il lance alors la mise en œuvre de l'algorithme de contrôle global (étape E108).

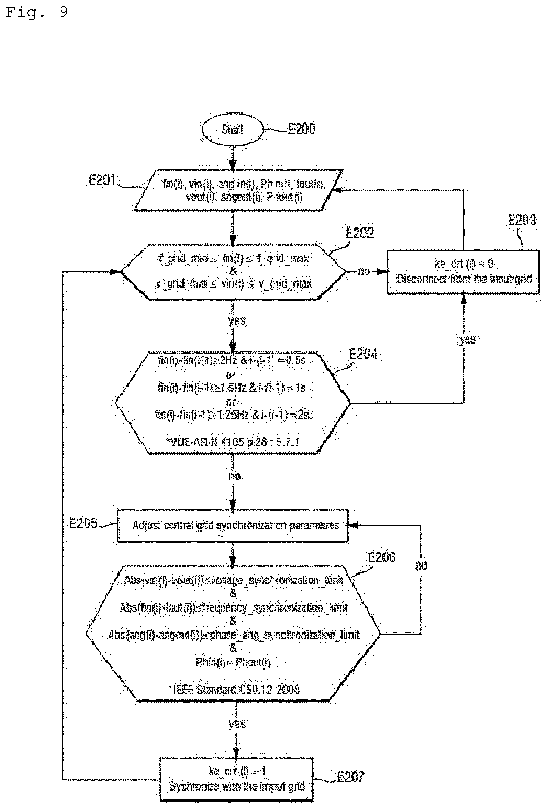

On décrit maintenant, en référence à la figure 9, un algorithme de synchronisation. Cet algorithme permet à chaque convertisseur de se synchroniser avec un réseau public 29 ou avec un groupe électrogène 28, en assurant que les conditions nécessaires sont réunies pour une synchronisation sûre et efficace.

L'algorithme est donc mis en œuvre par chaque convertisseur 1 de chaque groupe de convertisseurs 25.

L'algorithme débute par une étape de départ (étape E200).

Le convertisseur 1 acquiert un certain nombre de paramètre (étape 201) : voir figure 9.

Le convertisseur vérifie alors si :

$$f\_grid\_min \leq fin(i) \leq f\_grid\_max$$

et

$$v\_grid\_min \leq vin(i) \leq v\_grid\_max$$

(étape E202).

Si ce n'est pas le cas, le convertisseur 1 ouvre le contacteur d'entrée Ke et se déconnecte du réseau 29 ou du groupe électrogène 28 (étape E203) :

$$ke\_crt(i) = 0.$$

Si c'est le cas, le convertisseur 1 vérifie si :

$$fin(i) - fin(i-1) \geq 2\text{Hz} \ \texttt{et} \ i - (i-1) = 0{,}5s$$

ou

$$fin(i) - fin(i-1) \geq 1{,}5\text{Hz} \ \texttt{et} \ i - (i-1) = 1s$$

ou

$$fin(i) - fin(i-1) \geq 1{,}25\text{Hz} \ \texttt{et} \ i - (i-1) = 2s$$

(étape E204).

Cette condition est conforme à la norme VDE-AR-N 4105 p.26 : 5.7.1.

Si c'est le cas, l'algorithme passe à l'étape E203.

Si ce n'est pas le cas, le convertisseur 1 ajuste ses paramètres avec ceux du réseau public 29 ou du groupe électrogène 28 (étape E205).

Le convertisseur 1 vérifie alors si :

$$\text{Abs}\,(vin(i) - vout(i)) \leq voltage\_synchronization\_limit$$

et

$$\text{Abs}\,(\text{fin}(i) - \text{fout}(i)) \leq \text{frequency\_synchronization\_limit}$$

et

$$\text{Abs}\,(\text{angin}(i) - \text{angout}(i)) \leq \text{phase\_ang\_synchronization\_limit}$$

et

$$\text{Phin}(i) = \text{Phout}(i)$$

(étape E206).

Cette condition est conforme à la norme IEEE Standard CSO.12-2005.

Si ce n'est pas le cas, l'algorithme repasse à l'étape E205.

Si c'est le cas, le convertisseur 1 ferme le contacteur d'entrée Ke :

$$\text{ke\_crt}(i) = 1$$

Le convertisseur se synchronise avec le réseau public 29 ou le groupe électrogène 28 (étape E207).

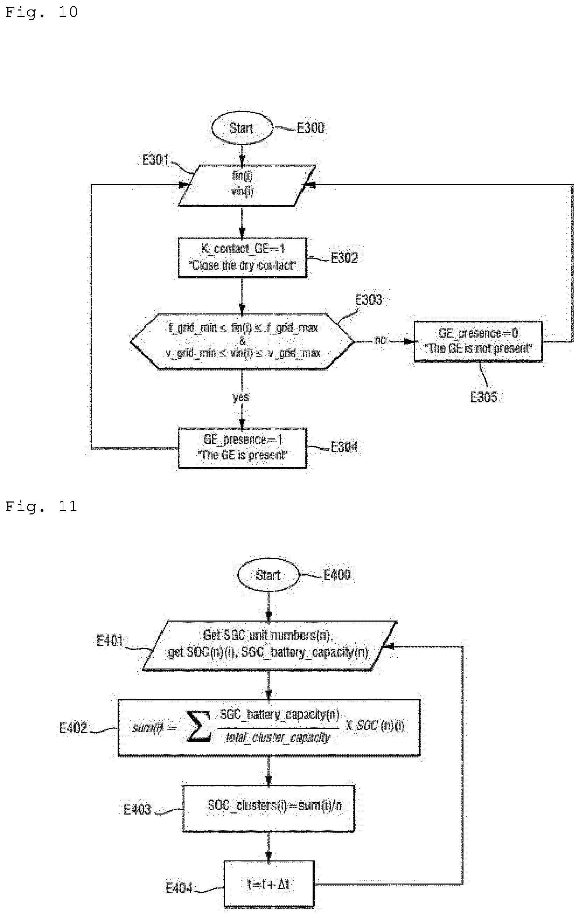

Pour vérifier la présence d'un groupe électrogène, chaque convertisseur met en œuvre l'algorithme de détection, visible sur la figure 10, qui consiste à fermer un contact sec et à tester la tension et la fréquence du groupe électrogène.

L'algorithme débute par une étape de départ (E300).

Le convertisseur acquiert fin(i) et v(i) : étape E301.

Le contact sec est fermé :

$$\text{k\_contact\_GE} = 1 \quad \text{(étape E302).}$$

Le convertisseur vérifie alors si :

$$\text{f\_grid\_min} \leq \text{fin}(i) \leq \text{f\_grid\_max}$$

et

$$\text{v\_grid\_min} \leq \text{vin}(i) \leq \text{v\_grid\_max}$$

(étape E303).

Si c'est le cas, le convertisseur détecte la présence du groupe électrogène (GE_presence = 1) - étape E304, et l'algorithme repasse à l'étape E301.

Si ce n'est pas le cas, le convertisseur ne détecte pas la présence du groupe électrogène (GE_presence = 0) - étape E305, et l'algorithme repasse à l'étape E301.

On décrit maintenant, en référence à la figure 11, l'algorithme de calcul de l'état de charge global de chaque groupe de convertisseurs.

L'objectif principal de cette fonction est de calculer l'état de charge moyen des batteries 3 du groupe de convertisseurs 25 en fonction de l'état de charge réel et de la capacité de chaque batterie. L'état de charge global est un état de charge pondéré en fonction des capacités de chaque batterie.

L'algorithme débute par une étape de départ (E400).

Le convertisseur maître local d'un groupe de convertisseurs acquiert les numéros de tous les convertisseurs du groupe de convertisseurs, leurs états de charge et la capacité des batteries :

$$\text{SGC unit numbers}(n), \; \text{SOC}(n)(i), \; \text{SGC\_battery\_capacity}(n)$$

(étape E401).

Le convertisseur calcule alors :

$$sum(i) = \sum \frac{SGC\_battery\_capacity(n)}{total\_cluster\_capacity} \, x \, SOC(n)(i)$$

(étape E402).

Puis, le convertisseur 1 calcule l'état de charge global du groupe de convertisseurs :

$$SOC\_cluster(i) = sum(i)/n$$

(étape E403).

Le temps t est alors incrémenté :

$$t = t + \Delta t \quad (\text{étape E404}).$$

L'algorithme repasse à l'étape E401.

On décrit maintenant un algorithme de protection, qui permet de mettre en œuvre une fonction de protection contre les courants inverses.

Lors le convertisseur fonctionne en mode onduleur (c'est-à-dire qu'il produit de l'énergie AC et la distribue) et que l'état de charge de sa batterie est très faible et que la tension sur le bus AC est élevée, un courant inverse peut circuler du bus AC vers la batterie à travers les diodes parasites des transistors. Ce courant peut endommager le convertisseur. La fonction de protection permet de protéger le convertisseur contre ce courant inverse.

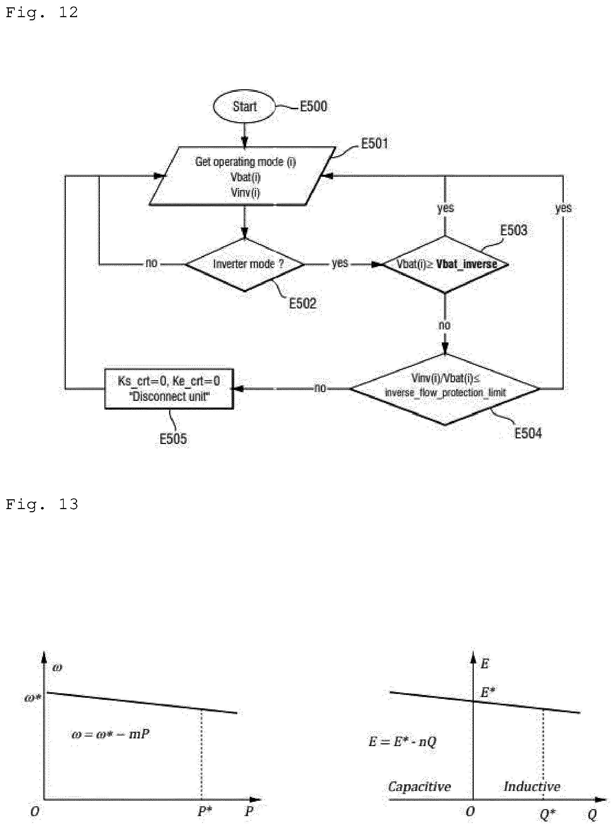

L'algorithme, visible sur la figure 12, débute par une étape de départ (E500).

Le convertisseur acquiert le mode de fonctionnement courant ainsi que **Vbat(i)** et **Vinv(i)** (étape E501).

Le convertisseur vérifie alors si le mode de fonctionnement courant est le mode onduleur (étape E502). Si ce n'est pas le cas, l'algorithme repasse à l'étape E501. Si c'est le cas, le convertisseur vérifie si :

$$Vbat\,(i) \geq Vbat\_inverse$$

(étape E503).

Si c'est le cas, l'algorithme repasse à l'étape E501.

Si ce n'est pas le cas, le convertisseur vérifie si

$$Vin\,(i)/Vbat(i) \leq inverse\_flow\_protection\_limit$$

(étape E504).

Si c'est le cas, l'algorithme repasse à l'étape E501.

Si ce n'est pas le cas, le convertisseur détecte un courant inverse trop élevé et déconnecte totalement le convertisseur (d'une possible source externe et du bus AC 10) en ouvrant le contacteur d'entrée Ke et le contacteur de sortie Ks :

$$Ks\_crt = 0, Ke\_crt = 0$$

(étape E505).

On décrit maintenant la régulation par statisme.

La régulation par statisme permet d'obtenir un partage correct de charge entre les convertisseurs d'un groupe de convertisseurs. La régulation par statisme permet de s'affranchir des liens de communication entre les convertisseurs et entre les groupes de convertisseurs.

Chaque convertisseur ne doit utiliser que les quantités qui peuvent être mesurées localement. Cela est essentiel pour le fonctionnement des grands systèmes, où la distance entre les convertisseurs rend la communication à grande vitesse difficile.

Pour éviter de surcharger les convertisseurs 1 (qui pourraient avoir, par exemple, à compenser des pertes dans des lignes de grande distance), il est important de s'assurer qu'ils partagent la charge proportionnellement à leur puissance nominale. Ceci est réalisé dans les systèmes d'alimentation conventionnels, avec plusieurs générateurs, en introduisant une fonction de statisme basée sur la fréquence de chaque convertisseur. Cela permet à chaque convertisseur 1 de s'adapter aux variations de la charge totale d'une manière déterminée par ses caractéristiques de variation de fréquence. De même, la variation de la tension avec puissance réactive est utilisée pour assurer un partage correct de la charge réactive. La même philosophie peut être utilisée pour assurer une distribution correcte de la puissance totale entre les convertisseurs 1 connectés en parallèle dans un système autonome. Cette méthode présente de nombreux avantages par rapport aux autres méthodes de gestion. En particulier, la régulation par statisme peut s'adapter à l'erreur de fréquence qui peut survenir entre deux convertisseurs différents (due par exemple à une dispersion dans l'électronique de commande), ce qui augmente considérablement la flexibilité du système de contrôle.

Un autre avantage de la régulation par statisme est que la perte d'un des convertisseurs n'entrainent pas la perte de l'ensemble du réseau global.

On se place tout d'abord dans le cas où l'onduleur de chaque convertisseur a une impédance de sortie purement inductive.

Pour un circuit inductif, la loi de régulation par statisme s'exprime comme suit :

$$\begin{cases} E = E^* - nQ \\ w = w^* - mP \end{cases}$$

où :

- $E^*$ est la valeur nominale de la tension en sortie de l'onduleur ;
- $w^*$ est la valeur nominale de la fréquence en sortie de l'onduleur ;
- n et m sont les coefficients de statisme.

Les fonctions linéaires $w^*$ en fonction de P et $E^*$ en fonction de Q sont visibles sur la figure 13.

On se place maintenant dans le cas où l'onduleur de chaque convertisseur a une impédance de sortie purement résistive

Pour un circuit inductif, la loi de régulation par statisme s'exprime comme suit :

$$\begin{cases} E = E^* - nP \\ w = w^* + mQ \end{cases}$$

où, à nouveau :

- $E^*$ est la valeur nominale de la tension en sortie de l'onduleur ;
- $w^*$ est la valeur nominale de la fréquence en sortie de l'onduleur ;
- n et m sont les coefficients de statisme.

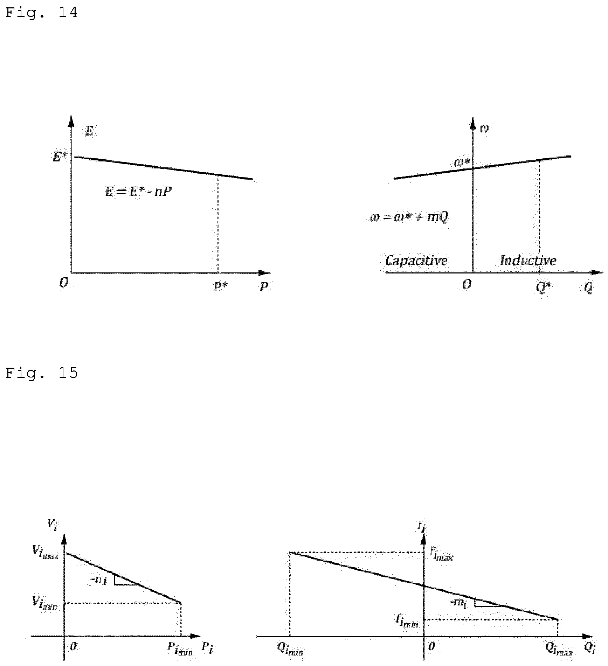

Les fonctions linéaires $E^*$ en fonction de P et $w^*$ en fonction de Q sont visibles sur la figure 14.

Pour le choix des coefficients de statisme, on s'est basé sur la norme EN61727. Cette norme limite la plage de tension et de fréquence au niveau des charges liées aux onduleurs solaires aux valeurs suivantes :

$$E \in [0.85*V_{nom} ; 1.10*V_{nom}],$$

$$f \in [f_{nom} - 1 ; f_{nom} + 1],$$

et donc :

$$E \in [195.5V ; 253V],$$

$$f \in [49Hz ; 51Hz].$$

En prenant en considération les valeurs maximale admissibles de puissance et de tension, ainsi que le type de l'impédance de sortie, on peut calculer les coefficients de statisme.

Si l'impédance de sortie des convertisseurs est purement résistive, on a :

$$n = \frac{V_{max} - V_{min}}{P_{max} - P_{min}} = \frac{\Delta V}{\Delta P} ,$$

$$m = \frac{f_{max} - f_{min}}{Q_{max} - Q_{min}} = \frac{\Delta f}{\Delta Q},$$

où $V_{max}$ est une tension maximale admissible en sortie des convertisseurs, $V_{min}$ est une tension minimale admissible, $P_{max}$ est une puissance active maximale admissible, $P_{min}$ est une puissance active minimale admissible, $f_{max}$ est une fréquence maximale admissible en sortie des convertisseurs, $f_{min}$ est une fréquence minimale admissible, $Q_{max}$ est une puissance réactive maximale admissible, $Q_{min}$ est une puissance réactive minimale admissible.

Les coefficients n et m (au temps i) sont visibles sur la figure 15.

Si l'impédance de sortie des convertisseurs est purement inductive, on trouve :

$$n = \frac{V_{max} - V_{min}}{Q_{max} - Q_{min}} = \frac{\Delta V}{\Delta Q},$$

$$m = \frac{f_{max} - f_{min}}{P_{max} - P_{min}} = \frac{\Delta f}{\Delta P}.$$

On décrit maintenant l'algorithme de contrôle global.

L'algorithme de contrôle global gère l'échange d'énergie entre les différents groupes de convertisseurs 25 et contrôle la synchronisation des différentes sources de puissance externes telles qu'un réseau public 29, un groupe électrogène 28 et un onduleur photovoltaïque 30.

On décrit tout d'abord l'algorithme de contrôle global qui est utilisé dans la première configuration de connexion, c'est-à-dire lorsqu'aucune source externe n'est connectée au système de convertisseurs 26.

L'objectif principal de cet algorithme est donc de gérer le flux d'énergie entre les groupes de convertisseurs isolés.

L'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, déconnecter le système de convertisseurs des abonnés.

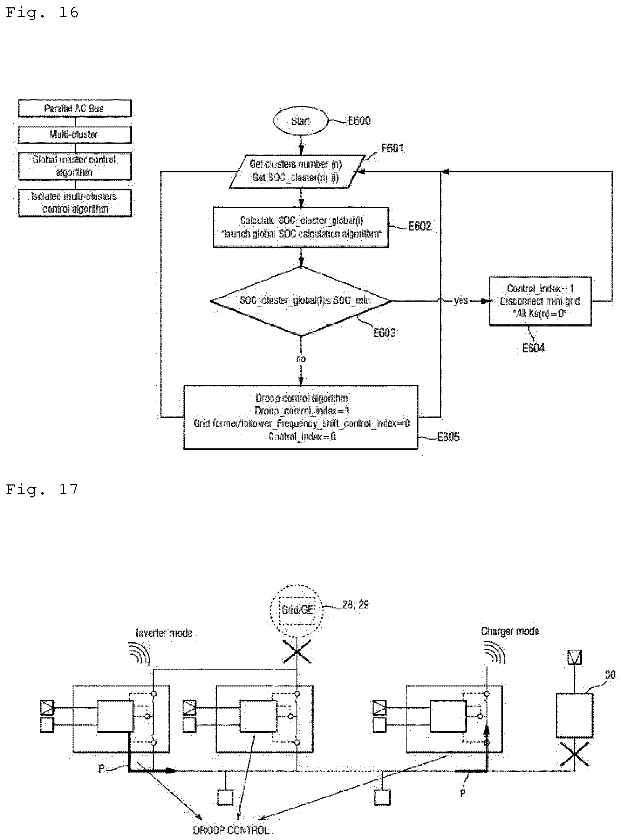

En référence à la figure 16, l'algorithme de contrôle global débute par une étape de départ (étape E600).

Le convertisseur maître global acquiert le nombre de groupes de convertisseurs (n) et les états de charge globaux de chaque groupe de convertisseurs (étape E601).

Le convertisseur maître global calcule la valeur maximale des états de charge globaux :

$$SOC\_cluster\_global(i)$$

(étape E602).

Le convertisseur maître global commande pour cela, dans chaque groupe de convertisseurs, la mise en œuvre de l'algorithme de calcul de l'état de charge global.

Le convertisseur vérifie que :

$$SOC\_cluster\_global(i) \leq SOC\_min$$

(étape E603).

Si c'est le cas, la variable de contrôle passe à 1 :

$$control\_index = 1$$

(étape E604).

Le convertisseur maître global déconnecte tous les convertisseurs 1 du bus AC 10 en ouvrant les contacteurs de sortie Ks ; pour tous les convertisseurs, on a :

$$Ks(n) = 0.$$

Si ce n'est pas le cas, les convertisseurs sont pilotés en utilisant une régulation par statisme, et on a :

$$\text{Droop\_control\_index} = 1$$

$$\text{Gridformer/follower\_Frequency\_shift\_control\_index} = 0$$

$$\text{Control\_index} = 0$$

(étape E605).

Comme on peut le voir sur la figure 17, les convertisseurs en mode « onduleur » transmettent de la puissance P aux convertisseurs qui ont besoin de puissance et qui sont alors en mode « chargeur ».

On décrit maintenant l'algorithme de configuration global qui est utilisé dans la deuxième configuration de connexion, c'est-à-dire lorsqu'un groupe électrogène est possiblement connecté à un groupe de convertisseurs particulier.

L'objectif principal de cet algorithme est donc de gérer le flux d'énergie entre les groupes de convertisseurs lorsqu'un groupe électrogène est connecté à un groupe de convertisseurs particulier.

L'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, utiliser une puissance externe fournie par le générateur électrogène en synchronisant des sorties des convertisseurs sur une tension externe produite par le groupe électrogène puis, lorsque les batteries reliées aux convertisseurs des groupes de convertisseurs sont rechargées, déconnecter le groupe de convertisseurs particulier du groupe électrogène et piloter les convertisseurs en utilisant une régulation par statisme.

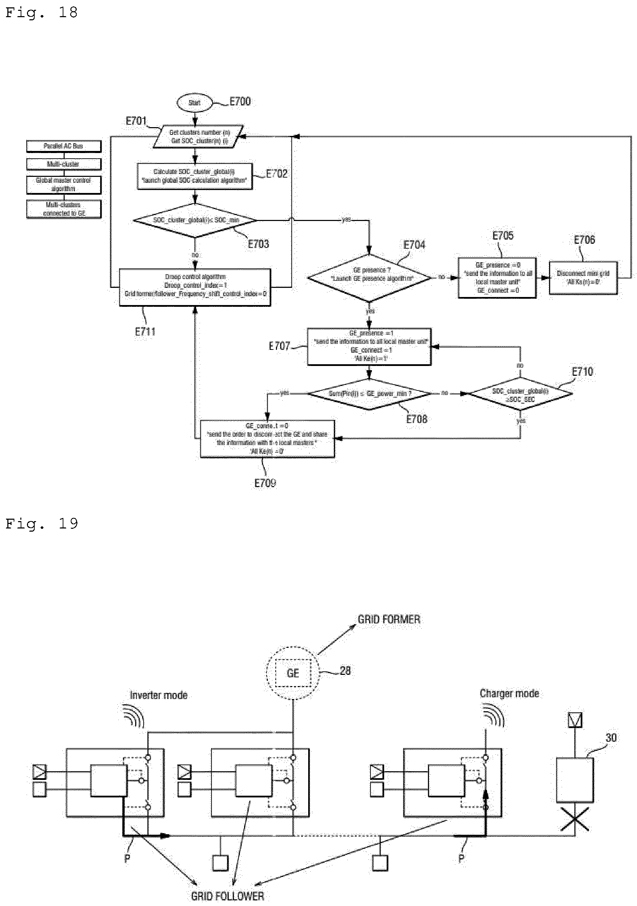

En référence à la figure 18, l'algorithme de contrôle global débute par une étape de départ (étape E700).

Le convertisseur maître global acquiert le nombre de groupes de convertisseurs et les états de charge globaux de chaque convertisseur (étape E701).

Le convertisseur calcule la valeur maximale des états de charge globaux :

$$\text{SOC\_cluster\_global(i)}$$

(étape E702).

Le convertisseur maître global commande pour cela, dans chaque groupe de convertisseurs, la mise en œuvre de l'algorithme de calcul de l'état de charge global.

Le convertisseur vérifie que :

$$\text{SOC\_cluster\_global(i)} \leq \text{SOC\_min}$$

(étape E703).

Si c'est le cas, le convertisseur maître global tente de détecter la présence du groupe électrogène, en utilisant l'algorithme de détection de groupe électrogène (étape E704).

Si aucun groupe électrogène n'est connecté (GE_presence = **0)**, le convertisseur maître global envoie cette information à tous les convertisseurs maîtres locaux (étape E705).

La commande de synchronisation du groupe électrogène avec le système de convertisseurs est inactive :

$$\text{GE\_connect} = 0$$

Le convertisseur maître global commande la déconnexion de tous les convertisseurs du bus AC en ouvrant les contacteurs de sortie : pour tous les convertisseurs, on a :

$$\text{Ks(n)} = 0$$

(étape E706).

L'algorithme repasse à l'étape E701.

Suite à l'étape E704, si la présence du groupe électrogène est bien détectée **(GE_presence** = 1), c'est-à-dire s'il existe un groupe de convertisseurs particulier qui est relié à un groupe électrogène, le convertisseur maître global envoie cette information à tous les convertisseurs maîtres locaux : E707.

On a :

$$GE\_connect = 1$$

Pour tous les convertisseurs, on a :

$$Ks(n) = 1$$

Le convertisseur maître global vérifie alors que :

$$Sum(Pin(i) \leq GE\_power\_min$$

(étape E708).

Si c'est le cas, et donc si la somme des puissances entrant dans les convertisseurs est inférieure au seuil de puissance minimum du groupe électrogène, cela signifie que les batteries n'ont plus besoin d'être rechargées.

La commande de synchronisation du groupe électrogène avec le système de convertisseurs est désactivée :

$$GE\_connect = 0 \quad \text{(étape E709)}.$$

Le convertisseur maître global envoie l'ordre de déconnecter le groupe de convertisseurs particulier du groupe électrogène et partage cette information avec tous les convertisseurs maîtres locaux. Le convertisseur maître global commande la déconnexion de tous les convertisseurs du bus AC en ouvrant les contacteurs de sortie : pour tous les convertisseurs, on a :

$$Ks(n) = 0.$$

A l'étape E708, si:

$$Sum(Pin(i) > GE\_power\_min,$$

le convertisseur maître global vérifie si :

$$SOC\_cluster\_globa \geq SOC\_SEC$$

(étape E710).

Si ce n'est pas le cas, l'algorithme repasse à l'étape E707 pour continuer à charger les batteries.

Si c'est le cas, cela signifie que la valeur maximale des états de charge globaux est supérieure ou égal au seuil de sécurité, il convient donc d'arrêter la charge.

L'algorithme passe à l'étape E709.

Suite à l'étape E709, l'algorithme passe à l'étape E711. Les convertisseurs sont pilotés en utilisant une régulation par statisme, et on a :

$$Droop\_control\_index = 1$$

$$Gridformer/follower\_Frequency\_shift\_control\_index = 0$$

L'algorithme repasse à l'étape E701.

A l'étape E703, si :

$$SOC\_cluster\_global(i) > SOC\_min,$$

l'algorithme passe à l'étape E711. Les groupes de convertisseurs n'ont en effet pas besoin de source de puissance externe et gèrent les flux entre eux.

Comme on peut le voir sur la figure 19, les convertisseurs en mode « onduleur » transmettent de la puissance P aux convertisseurs qui ont besoin de puissance et qui sont alors en mode « chargeur ».

On décrit maintenant l'algorithme de configuration global qui est utilisé dans la troisième configuration de connexion, c'est-à-dire lorsqu'un réseau public ou un groupe électrogène peut être connecté à un groupe de convertisseurs particulier.

Dans ce cas, les groupes de convertisseurs peuvent se synchroniser avec un groupe électrogène ou un réseau public. Chaque groupe électrogène peut injecteur ou absorber la puissance du réseau. L'objectif principal de cet algorithme est de gérer le flux d'énergie entre les groupes de convertisseurs lorsqu'il y a un groupe électrogène ou un réseau public connecté au système de convertisseurs.

L'algorithme de contrôle global comprend les étapes de :

- déterminer si la valeur maximale des états de charge globaux est inférieure ou égale à un seuil minimal et, si c'est le cas :

  - si un groupe électrogène est connecté à un groupe de convertisseurs particulier, utiliser une première puissance externe fournie par le générateur électrogène en synchronisant des sorties des convertisseurs sur une première tension externe produite par le groupe électrogène puis, lorsque les batteries reliées aux convertisseurs des groupes de convertisseurs sont rechargées, déconnecter le groupe de convertisseurs particulier du groupe électrogène et piloter les convertisseurs en utilisant une régulation par statisme ;
  - si le groupe électrogène n'est pas connecté au groupe de convertisseurs mais que le réseau de puissance externe est connecté au groupe de convertisseurs particulier, utiliser une deuxième puissance externe fournie par le réseau de puissance externe en synchronisant des sorties des convertisseurs sur une deuxième tension externe produite par le réseau de puissance externe.

L'algorithme de contrôle global comprend en outre les étapes, si la valeur maximale des états de charge globaux est supérieure au seuil minimal, de déterminer si la valeur maximale des états de charge globaux est supérieure ou égale à un seuil maximal et :

- si ce n'est pas le cas, de piloter les convertisseurs en utilisant la régulation prédéfinie ;
- si c'est le cas, et si le réseau de puissance externe est connecté au groupe de convertisseurs particulier, d'injecter un surplus d'énergie provenant des batteries dans le réseau de puissance externe.

La régulation prédéfinie est, dans le cas de la troisième configuration de connexion, une régulation par statisme.

L'algorithme débute par une étape de départ : étape E800.

Le convertisseur maître global acquiert le nombre de groupes de convertisseurs et les états de charge globaux de chaque convertisseur (étape E801).

Le convertisseur calcule la valeur maximale des états de charge globaux :

$$\text{SOC\_cluster\_global(i)} \quad \texttt{(étape E802)}.$$

Le convertisseur maître global commande pour cela, dans chaque groupe de convertisseurs, la mise en œuvre de l'algorithme de calcul de l''état de charge global.

Le convertisseur vérifie que :

$$\text{SOC\_cluster\_global(i)} \leq \text{SOC\_min}$$

(étape E803).

Si c'est le cas, le convertisseur maître global tente de détecter la présence du groupe électrogène, en utilisant l'algorithme de détection de groupe électrogène (étape E804).

Si aucun groupe électrogène n'est connecté (GE_presence = **0),** le convertisseur maître global envoie cette information à tous les convertisseurs maîtres locaux (étape E805).

On a :

$$\text{GE\_connect} = 0$$

Le convertisseur maître global tente alors de détecter la présence du réseau public (étape E806).

Si c'est le cas **(Grid_presence** = **1**), c'est-à-dire si un des groupes de convertisseurs particulier est connecté au réseau public, le convertisseur maître global envoie cette information à tous les convertisseurs maîtres locaux (étape E807).

La commande de synchronisation du réseau public avec le système de convertisseurs est active :

$$\mathrm{Grid\_connect} \ = \ 1$$

Le convertisseur maître global commande la connexion de tous les convertisseurs du groupe de convertisseurs particulier au réseau public en ouvrant les contacteurs d'entrée. Pour tous les convertisseurs du groupe de convertisseurs particulier, on a :

$$\mathrm{Ke(n)} = 0$$

L'algorithme passe à l'étape E801.

A l'étape E806, si la présence du réseau public n'est pas détectée **(Grid_presence = 0),** le convertisseur maître global envoie cette information à tous les convertisseurs maître locaux.

On a :

$$\mathrm{Grid\_connect} \ = \ 0$$

Le convertisseur maître global commande la déconnexion de tous les convertisseurs du bus AC en ouvrant les contacteurs de sortie : pour tous les convertisseurs, on a :

$$\mathrm{Ks(n)} = 0$$

(étape E808).

L'algorithme passe à l'étape E801.

A l'étape E804, si le groupe électrogène est bien détecté **(GE_presence** = 1), c'est-à-dire s'il y a un groupe électrogène qui est connecté à un groupe de convertisseurs particulier, le convertisseur maître global envoie cette information à tous les convertisseurs maîtres locaux (étape E809).

On a :

$$\mathrm{GE\_connect} \ = \ 1$$

Pour tous les convertisseurs du groupe de convertisseurs particuliers, on a :

$$\mathrm{Ke(n)} = 1$$

Le convertisseur maître global vérifie alors que :

$$\mathrm{Sum(Pin(i)} \leq \mathrm{GE\_power\_min}$$

(étape E810).

Si c'est le cas, cela signifie que les batteries n'ont pas besoin d'être rechargées.

Le convertisseur maître global envoie l'ordre de déconnecter le groupe de convertisseurs particulier du groupe électrogène et partage cette information avec tous les convertisseurs maîtres locaux :

$$\mathrm{GE\_connect} \ = \ 0$$

(étape E811).

Pour tous les convertisseurs du groupe de convertisseurs particulier, on a :

$$\mathrm{Ke(n)} = 0$$

A l'étape E810, si :

$$Sum(Pin(i) > GE\_power\_min$$

Le convertisseur maître global vérifie si :

$$SOC\_cluster\_globa \geq SOC\_SEC$$

(étape E812).

Si ce n'est pas le cas, l'algorithme passe à l'étape E809.

Si c'est le cas, l'algorithme passe à l'étape E811.

Suite à l'étape E811, l'algorithme passe à l'étape E813. Les convertisseurs sont pilotés en utilisant une régulation par statisme, et on a :

$$Droop\_control\_index = 1$$

$$Gridformer/follower\_Frequency\_shift\_control\_index = 0$$

L'algorithme passe à l'étape E801.

A l'étape E803, si

$$SOC\_cluster\_global(i) > SOC\_min$$

le convertisseur maître global vérifie si :

$$SOC\_cluster\_global(i) \geq SOC\_max$$

(étape E814).

Si ce n'est pas le cas, l'algorithme passe à l'étape E813.

Si c'est le cas, l'algorithme passe à l'étape E815.

Le convertisseur maître global tente de détecter la présence du réseau public. Si celui-ci n'est pas détecté, l'algorithme passe à l'étape E813.

S'il est détecté **(Grid_presence = 1),** le convertisseur maître global envoie cette information à tous les convertisseurs maîtres locaux (étape E816).

On a :

$$Grid\_connect = 1$$

Pour tous les convertisseurs du groupe de convertisseurs particulier qui est connecté au réseau public, on a :

$$Ke(n) = 1$$

L'algorithme passe à l'étape E801.

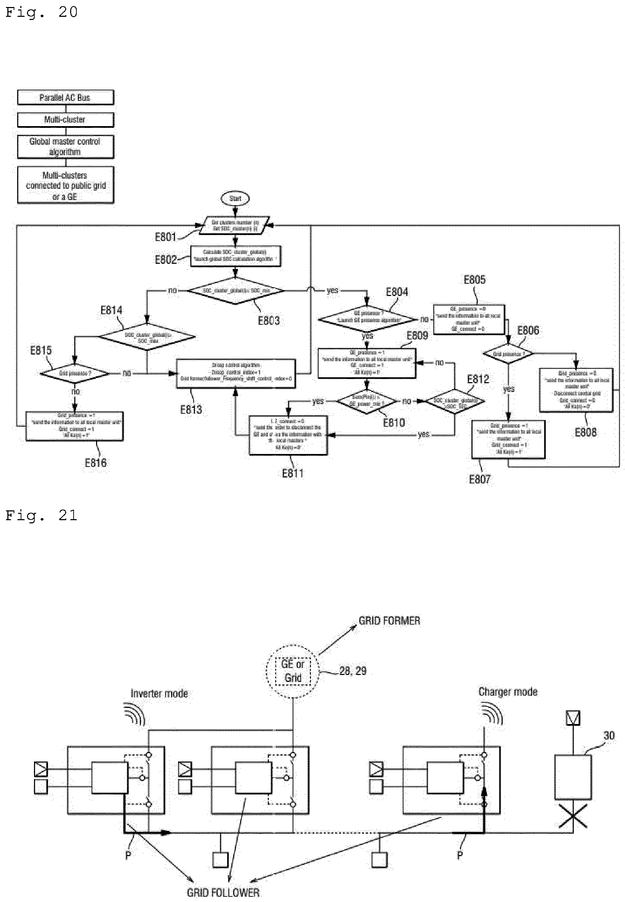

Comme on peut le voir sur la figure 21, les convertisseurs en mode « onduleur » transmettent de la puissance P aux convertisseurs qui ont besoin de puissance et qui sont alors en mode « chargeur ».

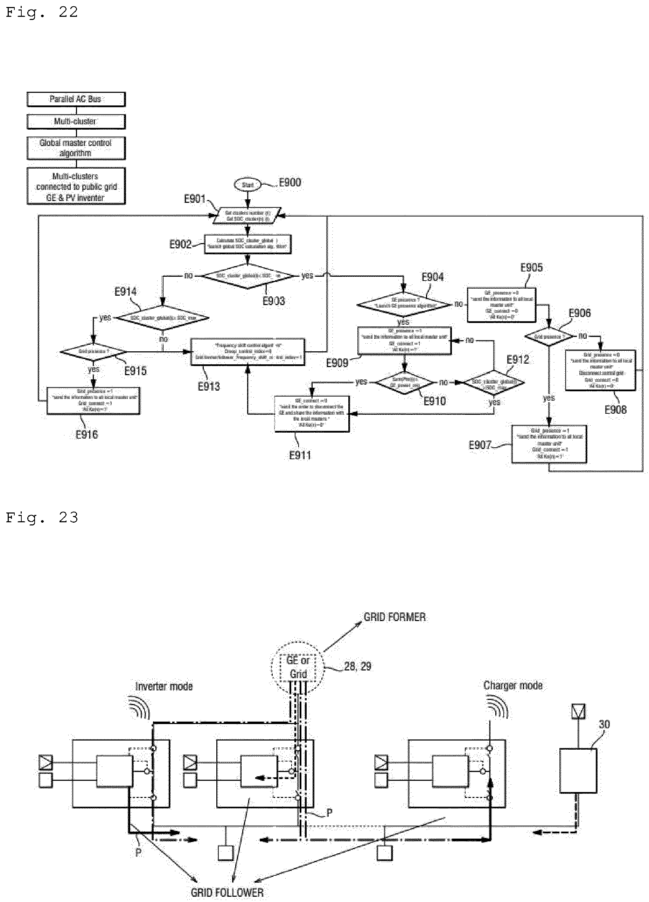

L'algorithme de contrôle global de la figure 22 correspond à la quatrième configuration de connexion.

Un onduleur photovoltaïque peut être connecté à la sortie des groupes de convertisseurs et lorsqu'un surplus de puissance est détecté le contrôle par décalage de fréquence sera activé pour limiter la puissance de l'onduleur photovoltaïque. L'objectif principal de cet algorithme est de gérer le flux d'énergie entre les groupes de convertisseurs lorsqu'il y a un groupe électrogène ou un réseau public connecté à l'entrée d'un groupe de convertisseurs et un onduleur photovoltaïque connecté à la sortie des groupes de convertisseurs.

L'algorithme de la figure 22 est semblable à l'algorithme de la figure 20 (les étapes 900 à 916 correspondent aux étapes 800 à 816), si ce n'est qu'à l'étape 913, la régulation prédéfinie qui est mise en œuvre utilise un contrôle par décalage de fréquence (du fait de la présence de l'onduleur photovoltaïque 30).

On a alors :

$$\text{Droop\_control\_index} = 0$$

$$\text{Grid former/follower\_Frequency\_shift\_control\_index} = 1$$

On voit les échanges de puissance sur la figure 23.

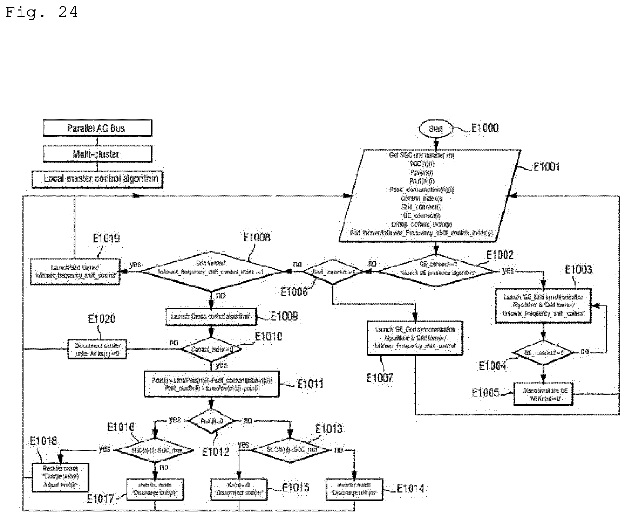

En référence à la figure 24, on décrit maintenant l'algorithme de contrôle local mis en œuvre par un convertisseur maître local.

Le convertisseur maître local reçoit les ordres de contrôle (haut niveau) du convertisseur maître global. Il gère en outre le flux d'énergie dynamique au sein du groupe de convertisseurs. L'objectif principal de cet algorithme est de gérer le flux de puissance entre le convertisseur à l'intérieur du groupe de convertisseurs en fonction de l'algorithme de contrôle défini par le convertisseur maître global.

Suite à l'étape de départ E1000, le convertisseur acquiert un certain nombre de paramètres : voir sur la figure 24 (étape E1001).

Le convertisseur maître local vérifie si :

$$\text{GE\_connect} = 1$$

en lançant l'algorithme de détection de présence du groupe électrogène (étape E1002).

Si c'est le cas, cela signifie que le groupe de convertisseurs auquel appartient le convertisseur maître local est connecté à un groupe électrogène. Le convertisseur maître local démarre la synchronisation avec le groupe électrogène et lance les algorithmes appropriés, c'est-à-dire :

$$\text{Grid former/follower\_Frequency\_shift\_control}$$

(étape E1003).

Il vérifie alors si :

$$\text{GE\_connect} = 0$$

(étape E1004).

Si c'est le cas, il déconnecte tous les convertisseurs du groupe électrogène et ouvre tous les contacteurs d'entrée :

$$\text{Ke(n)} = 0$$

(étape E1005).

Le procédé passe à l'étape E1001.

A l'étape E1002, si le groupe électrogène n'est pas connecté, le convertisseur maître local vérifie si le réseau public est connecté (étape E1006).

Si c'est le cas, il lance l'algorithme :

$$\text{Grid former/follower\_Frequency\_shift\_control}$$

(étape E1007).

L'algorithme passe à l'étape E1001.

A l'étape E1006, si le réseau public n'est pas connecté, il vérifie si :

$$\text{Grid former/follower\_Frequency\_shift\_control\_index} = 1$$

(étape E1008).

Si ce n'est pas le cas, il lance la régulation par statisme (étape E1009).

Il vérifie si :

$$\text{Control\_index} = 0$$

(étape E1010).

Si c'est le cas, il calcule :

$$Pout(i) = sum(Pout(n)(i) - Psel\_consumption(n)(i))$$

et

$$Pnet\_cluster(i) = sum(Ppv(n)(i) - pout(i))$$

(étape E1011)

Il vérifie alors si :

$$Pnet(i) \geq 0$$

(étape E1012).

Si ce n'est pas le cas, il vérifie si :

$$SOC(n)(i) < SOC\_min$$

(étape E1013).

Si ce n'est pas le cas, il passe en mode onduleur et injecte de la puissance sur le réseau (étape 1014).

Si c'est le cas, il ouvre le contacteur de sortie et déconnecte le convertisseur du bus AC :

$$Ks(n) = 0$$

(étape E1015).

L'algorithme passe à l'étape E1000.

A l'étape 1012, si on a bien

$$Pnet(i) \geq 0$$

il vérifie si :

$$SOC(n)(i) \leq SOC\_max$$

(étape E1016).

Si ce n'est pas le cas, il passe en mode onduleur et injecte de la puissance sur le réseau (étape E1017). L'algorithme passe à l'étape E1001.

Si c'est le cas, il passe en mode de charge et ajuste Pref(i) (étape E1018).

L'algorithme passe à l'étape E1001.

A l'étape E1008, si on a bien

$$Grid\ former/follower\_Frequency\_shift\_control\_index = 1$$

le contrôleur maître local lance :

$$Grid\ former/follower\_Frequency\_shift\_control$$

(étape E1019).

A l'étape E1010, si on a :

$$Control\_index = 1$$

il déconnecte le groupe de convertisseurs du bus AC ; pour tous les convertisseurs du groupe de convertisseurs on a :

$$Ks(n) = 0$$

(étape E1020).

On décrit maintenant un algorithme esclave, mis en œuvre par chaque convertisseur esclave.

Chaque convertisseur esclave reçoit le contrôle dynamique du convertisseur maître local, cependant il peut décider de prendre des mesures de contrôle en fonction de conditions spécifiques.

Ainsi, suite à une étape de départ E1100, le convertisseur esclave acquiert et analyse des paramètres (voir étape E1101).

Il vérifie si :

$$fout(i) > max\_frequency\_threshold$$

ou si

$$fout(i) < min\_frequency\_threshold$$

ou si

$$vout(i) > max\_voltage\_threshold$$

ou si

$$vout(i) < min\_voltage\_threshold$$

(étape E1102).

Si l'une de ces conditions est vérifiée, il se déconnecte du bus AC : étape 1103.

On a alors :

$$Ks(i) = 0$$

L'algorithme passe à l'étape E1101.

A l'étape E1102, si aucune de ces conditions n'est vérifiée, il se connecte au bus AC : Ks(i) = 1 (étape E1104).

Le convertisseur acquiert les ordres de contrôle du convertisseur maître local, puis passe à l'étape E1105, où il vérifie si :

$$SOC(i) \leq SOC\_min$$

Si c'est le cas, l'algorithme passe à l'étape E1103.

Sinon, l'algorithme passe à l'étape E1100.

Bien entendu, l'invention n'est pas limitée au mode de réalisation décrit mais englobe toute variante entrant dans le champ de l'invention telle que définie par les revendications.

## Revendications

1. Procédé de synchronisation, mis en œuvre dans un système de convertisseurs (26) qui comporte une pluralité de groupes de convertisseurs (25), chaque groupe de convertisseurs comprenant des convertisseurs (1) regroupés localement, chaque convertisseur étant connecté à au moins un panneau photovoltaïque (2) et à au moins une batterie (3) pour alimenter au moins un abonné, les convertisseurs comprenant tous une sortie (18) reliée à un même bus de puissance (10), de sorte que les groupes de convertisseurs sont connectés parallèlement entre eux en étant reliés audit bus de puissance, chaque groupe de convertisseurs comprenant au moins un module de communication radiofréquence (16) pour communiquer avec les autres groupes de convertisseurs, le procédé de synchronisation comprenant les étapes de :

   - faire échanger régulièrement par les groupes de convertisseurs (25), en utilisant les modules de communication radiofréquence, des valeurs d'au moins un paramètre de fonctionnement global associées chacune à un groupe de convertisseurs distinct ;

- définir dynamiquement et en temps réel un groupe de convertisseurs maître à partir de ces valeurs du paramètre de fonctionnement global ;

- acquérir un paramètre de configuration, représentatif d'une configuration de connexion dans laquelle se trouve le système de convertisseurs (26) et qui dépend d'au moins une source de puissance externe (28, 29, 30) susceptible d'être connectée au système de convertisseurs, et d'un type de ladite source de puissance externe ;

- faire mettre en œuvre, par le groupe de convertisseurs maître, un algorithme de contrôle global permettant de synchroniser entre eux et de gérer des flux de puissance globaux entre les groupes de convertisseurs, l'algorithme de contrôle global étant défini en fonction du paramètre de configuration.

2. Procédé de synchronisation selon la revendication 1, dans lequel, pour chaque groupe de convertisseurs (25), le paramètre de fonctionnement global est un état de charge global représentatif des états de charge des batteries (3) connectées aux convertisseurs (1) dudit groupe de convertisseurs, le groupe de convertisseurs maître étant le groupe de convertisseurs qui est associé à une valeur maximale des états de charge globaux.

3. Procédé de synchronisation selon l'une des revendications précédentes, comprenant en outre l'étape, pour chaque groupe de convertisseurs (25), de :

- définir dynamiquement et en temps réel un convertisseur maître local dudit groupe de convertisseurs à partir de valeurs d'au moins un paramètre de fonctionnement local associées chacune à un convertisseur distinct dudit groupe de convertisseurs ;

- faire mettre en œuvre, par le convertisseur maître local, un algorithme de contrôle local permettant de synchroniser entre eux et de gérer des flux de puissance locaux entre les convertisseurs dudit groupe de convertisseurs.

4. Procédé de synchronisation selon la revendication 3, dans lequel l'algorithme de contrôle global est mis en œuvre par le convertisseur maître local du groupe de convertisseurs maître.

5. Procédé de synchronisation selon la revendication 4, dans lequel, pour chaque convertisseur, le paramètre de fonctionnement local est un état de charge de la batterie connectée audit convertisseur, le convertisseur maître local dudit groupe de convertisseurs étant le convertisseur qui est associé à une valeur maximale des états de charge.

6. Procédé de synchronisation selon l'une des revendications précédentes, dans lequel, lorsque la configuration de connexion est une première configuration de connexion dans laquelle aucune source de puissance externe n'est connectée au système de convertisseurs (26), l'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, déconnecter le système de convertisseurs des abonnés.

7. Procédé de synchronisation selon l'une des revendications 1 à 5, dans lequel, lorsque la configuration de connexion est une deuxième configuration de connexion dans laquelle un groupe électrogène (28) peut être connecté à un groupe de convertisseurs particulier, l'algorithme de contrôle global comprend les étapes de :

- déterminer si la valeur maximale des états de charge globaux est inférieure ou égale à un seuil minimal ;
- si ce n'est pas le cas, piloter les convertisseurs en utilisant une régulation par statisme ;
- si c'est le cas, utiliser une puissance externe fournie par le générateur électrogène en synchronisant des sorties des convertisseurs sur une tension externe produite par le groupe électrogène, puis, lorsque les batteries sont rechargées, déconnecter le groupe de convertisseurs particulier du groupe électrogène et piloter les convertisseurs en utilisant une régulation par statisme.

8. Procédé de synchronisation selon l'une des revendications 1 à 5, dans lequel, lorsque la configuration de connexion est une troisième configuration de connexion dans laquelle un réseau de puissance externe (29) ou un groupe électrogène (28) peut être connecté à un groupe de convertisseurs particulier, ou une quatrième configuration de connexion dans laquelle un réseau de puissance externe ou un groupe électrogène peut être connecté à un groupe de convertisseurs particulier, et un onduleur photovoltaïque (30) peut être connecté au bus de puissance, l'algorithme de contrôle global comprend les étapes de :

- déterminer si la valeur maximale des états de charge globaux est inférieure ou égale à un seuil minimal et, si c'est le cas :

- si le groupe électrogène est connecté au groupe de convertisseurs particulier, utiliser une première puissance externe fournie par le générateur électrogène en synchronisant des sorties des convertisseurs sur une première tension externe produite par le groupe électrogène puis, lorsque les batteries sont rechargées, déconnecter le groupe de convertisseurs particulier du groupe électrogène et piloter les convertisseurs en utilisant une régulation par statisme ;
- si le groupe électrogène n'est pas connecté au groupe de convertisseurs mais que le réseau de puissance externe est connecté au groupe de convertisseurs particulier, utiliser une deuxième puissance externe fournie par le réseau de puissance externe en synchronisant des sorties des convertisseurs sur une deuxième tension externe produite par le réseau de puissance externe.

9. Procédé de synchronisation selon la revendication 8, dans lequel l'algorithme de contrôle global comprend en outre les étapes, si la valeur maximale des états de charge globaux est supérieure au seuil minimal, de déterminer si la valeur maximale des états de charge globaux est supérieure ou égale à un seuil maximal et :

- si ce n'est pas le cas, de piloter les convertisseurs en utilisant la régulation prédéfinie ;
- si c'est le cas, et si le réseau de puissance externe est connecté au groupe de convertisseurs particulier, d'injecter un surplus d'énergie provenant des batteries dans le réseau de puissance externe.

10. Procédé de synchronisation selon l'une des revendications 8 ou 9, dans lequel, si aucun onduleur photovoltaïque (30) n'est connecté au bus de puissance (10), la régulation prédéfinie est une régulation par statisme, et, si un onduleur photovoltaïque (30) est connecté au bus de puissance (10), la régulation prédéfinie est une régulation utilisant un contrôle par décalage de fréquence.

11. Procédé de synchronisation selon l'une des revendications 6 à 10, dans lequel les coefficients n et m utilisés pour la régulation par statisme sont tels que :

- si une impédance de sortie des convertisseurs est purement résistive, on a :

$$n = \frac{V_{max} - V_{min}}{P_{max} - P_{min}},$$

$$m = \frac{f_{max} - f_{min}}{Q_{max} - Q_{min}},$$

- si une impédance de sortie des convertisseurs est purement inductive, on a :

$$n = \frac{V_{max} - V_{min}}{Q_{max} - Q_{min}},$$

$$m = \frac{f_{max} - f_{min}}{P_{max} - P_{min}},$$

où $V_{max}$ est une tension maximale admissible en sortie des convertisseurs, $V_{min}$ est une tension minimale admissible, $P_{max}$ est une puissance active maximale admissible, $P_{min}$ est une puissance active minimale admissible, $f_{max}$ est une fréquence maximale admissible, $f_{min}$ est une fréquence minimale admissible, $Q_{max}$ est une puissance réactive maximale admissible, $Q_{min}$ est une puissance réactive minimale admissible.

12. Convertisseur (1) agencé pour être connecté à au moins un panneau photovoltaïque (2) et à au moins une batterie (3) pour alimenter au moins un abonné, et comprenant un module de communication radiofréquence (16) et une unité de traitement (7) dans laquelle est mis en œuvre le procédé de synchronisation selon l'une des revendications 1 à 11.

13. Programme d'ordinateur comprenant des instructions qui conduisent l'unité de traitement (7) du convertisseur (1) selon la revendication 12 à exécuter les étapes du procédé de synchronisation selon l'une des revendications 1 à 11.

**14.** Support d'enregistrement lisible par ordinateur, sur lequel est enregistré le programme d'ordinateur selon la revendication 13.

**Patentansprüche**

**1.** Synchronisationsverfahren, das in einem Wandlersystem (26) ausgeführt wird, welches eine Mehrzahl von Wandlergruppen (25) enthält, wobei jede Wandlergruppe lokal gruppierte Wandler (1) umfasst, wobei jeder Wandler an zumindest ein Photovoltaikpanel (2) und an zumindest eine Batterie (3) angeschlossen ist, um zumindest einen Abnehmer zu versorgen, wobei alle Wandler jeweils einen mit ein und demselben Strombus (10) verbundenen Ausgang (18) umfassen, sodass die Wandlergruppen, indem sie mit demselben Strombus verbunden sind, untereinander parallel geschaltet sind, wobei jede Wandlergruppe zumindest ein Hochfrequenz-Kommunikationsmodul (16) zur Kommunikation mit den anderen Wandlergruppen umfasst, wobei das Synchronisationsverfahren die Schritte umfasst, dass:

- die Wandlergruppen (25) dazu veranlasst werden, unter Verwendung der Hochfrequenz-Kommunikationsmodule regelmäßig Werte zumindest eines globalen, jeweils einer bestimmten Wandlergruppe zugeordneten Betriebsparameters auszutauschen;
- aus diesen Werten des globalen Betriebsparameters dynamisch und in Echtzeit eine Master-Wandlergruppe definiert wird;
- ein Konfigurationsparameter erfasst wird, der eine Verbindungskonfiguration darstellt, in welcher sich das Wandlersystem (26) befindet und die von zumindest einer an das Wandlersystem anschließbaren externen Leistungsquelle (28, 29, 30) sowie von einer Art der externen Leistungsquelle abhängig ist;
- die Master-Wandlergruppe dazu veranlasst wird, einen globalen Regelalgorithmus auszuführen, mit welchem globale Leistungsflüsse zwischen den Wandlergruppen untereinander synchronisiert und verwaltet werden können, wobei der globale Regelalgorithmus in Abhängigkeit zu dem Konfigurationsparameter definiert wird.

**2.** Synchronisationsverfahren nach Anspruch 1, wobei es sich für jede Wandlergruppe (25) bei dem globalen Betriebsparameter um einen globalen Ladezustand handelt, welcher Ladezustände der an die Wandler (1) der Wandlergruppe angeschlossenen Batterien (3) darstellt, wobei es sich bei der Master-Wandlergruppe um jene Wandlergruppe handelt, die mit einem Maximalwert der globalen Ladezustände verbunden ist.

**3.** Synchronisationsverfahren nach einem der vorhergehenden Ansprüche, ferner umfassend den Schritt, dass für jede Wandlergruppe (25):

- aus Werten zumindest eines lokalen Betriebsparameters, die jeweils mit einem bestimmten Wandler der Wandlergruppe verbunden sind, dynamisch und in Echtzeit ein lokaler Master-Wandler der Wandlergruppe definiert wird;
- der lokale Master-Wandler dazu veranlasst wird, einen lokalen Regelalgorithmus auszuführen, mit welchem lokale Leistungsflüsse untereinander synchronisiert und zwischen den Wandlern der Wandlergruppe verwaltet werden.

**4.** Synchronisationsverfahren nach Anspruch 3, wobei der globale Regelalgorithmus von dem lokalen Master-Wandler der Master-Wandlergruppe ausgeführt wird.

**5.** Synchronisationsverfahren nach Anspruch 4, wobei es sich für jeden Wandler bei dem lokalen Betriebsparameter um einen Ladezustand der an den Wandler angeschlossenen Batterie handelt, wobei es sich bei dem lokalen Master-Wandler der Wandlergruppe um jenen Wandler handelt, der mit einem Maximalwert der Ladezustände verbunden ist.

**6.** Synchronisationsverfahren nach einem der vorhergehenden Ansprüche, wobei, wenn es sich bei der Verbindungskonfiguration um eine erste Verbindungskonfiguration handelt, in welcher keine externe Leistungsquelle an das Wandlersystem (26) angeschlossen ist, der globale Regelalgorithmus die Schritte umfasst, dass:

- erkannt wird, ob der Maximalwert der globalen Ladezustände kleiner oder gleich einem Minimalschwellenwert ist;
- wenn dies nicht der Fall ist, die Wandler unter Verwendung einer Statik-Regelung angesteuert werden;
- wenn dies der Fall ist, das Wandlersystem von den Abnehmern abgetrennt wird.

**7.** Synchronisationsverfahren nach einem der Ansprüche 1 bis 5, wobei, wenn es sich bei der Verbindungskonfiguration um eine zweite Verbindungskonfiguration handelt, in welcher eine Generatorgruppe (28) an eine bestimmte Wandlergruppe anschließbar ist, der globale Regelalgorithmus die Schritte umfasst, dass:

- erkannt wird, ob der Maximalwert der globalen Ladezustände kleiner oder gleich einem Minimalschwellenwert ist;
- wenn dies nicht der Fall ist, die Wandler unter Verwendung einer Statik-Regelung angesteuert werden;
- wenn dies der Fall ist, eine von der Generatorgruppe bereitgestellte externe Leistung verwendet wird, indem Wandlerausgänge auf eine von der Generatorgruppe bereitgestellte externe Spannung synchronisiert werden, anschließend nach erfolgtem Aufladen der Batterien die betreffende Wandlergruppe von der Generatorgruppe abgetrennt wird und die Wandler unter Verwendung einer Statik-Regelung angesteuert werden.

**8.** Synchronisationsverfahren nach einem der Ansprüche 1 bis 5, wobei, wenn es sich bei der Verbindungskonfiguration um eine dritte Verbindungskonfiguration handelt, in welcher ein externes Leistungsnetz (29) oder eine Generatorgruppe (28) an eine bestimmte Wandlergruppe anschließbar ist, oder wenn es sich um eine vierte Verbindungskonfiguration handelt, in welcher ein externes Leistungsnetz oder eine Generatorgruppe an eine bestimmte Wandlergruppe anschließbar ist und ein Photovoltaik-Wechselrichter (30) an einen Strombus anschließbar ist, der globale Regelalgorithmus die Schritte umfasst, dass:

- erkannt wird, ob der Maximalwert der globalen Ladezustände kleiner oder gleich einem Minimalschwellenwert ist, und, wenn dies der Fall ist, dass:
- wenn die Generatorgruppe an die bestimmte Wandlergruppe angeschlossen ist, eine erste von der Generatorgruppe bereitgestellte externe Leistung verwendet wird, indem Wandlerausgänge auf eine erste von der Generatorgruppe bereitgestellte externe Spannung synchronisiert werden, anschließend nach erfolgtem Aufladen der Batterien die bestimmte Wandlergruppe von der Generatorgruppe abgetrennt wird und die Wandler unter Verwendung einer Statik-Regelung angesteuert werden;
- wenn die Generatorgruppe nicht an die Wandlergruppe angeschlossen ist, jedoch das externe Leistungsnetz an die bestimmte Wandlergruppe angeschlossen ist, eine zweite von dem externen Leistungsnetz bereitgestellte externe Leistung verwendet wird, indem Wandlerausgänge auf eine zweite von dem externen Leistungsnetz bereitgestellte externe Spannung synchronisiert werden.

**9.** Synchronisationsverfahren nach Anspruch 8, wobei der globale Regelalgorithmus ferner die Schritte umfasst, dass, wenn der Maximalwert der globalen Ladezustände größer als der Minimalschwellenwert ist, erkannt wird, ob der Maximalwert der globalen Ladezustände größer oder gleich einem Maximalschwellenwert ist, und:

- wenn dies nicht der Fall ist, die Wandler unter Verwendung der vorgegebenen Regelung angesteuert werden;
- wenn dies der Fall ist und wenn das externe Leistungsnetz an die bestimmte Wandlergruppe angeschlossen ist, überschüssige Energie aus den Batterien in das externe Leistungsnetz eingespeist wird.

**10.** Synchronisationsverfahren nach einem der Ansprüche 8 oder 9, wobei es sich, wenn kein Photovoltaik-Wechselrichter (30) an den Strombus (10) angeschlossen ist, bei der vorgegebenen Regelung um eine Statik-Regelung handelt, und es sich, wenn ein Photovoltaik-Wechselrichter (30) an den Strombus (10) angeschlossen ist, bei der vorgegebenen Regelung um eine Frequenzversatz-Regelung handelt.

**11.** Synchronisationsverfahren nach einem der Ansprüche 6 bis 10, wobei die für die Statik-Regelung verwendeten Koeffizienten n und m derart festgelegt sind, dass:

- wenn es sich bei einer Ausgangsimpedanz der Wandler um eine rein resistive Impedanz handelt, Folgendes gilt:

$$n = \frac{V_{max} - V_{min}}{P_{max} - P_{min}},$$

$$m = \frac{f_{max} - f_{min}}{Q_{max} - Q_{min}},$$

- wenn es sich bei einer Ausgangsimpedanz der Wandler um eine rein induktive Impedanz handelt, Folgendes gilt:

$$n = \frac{V_{max} - V_{min}}{Q_{max} - Q_{min}},$$

$$m = \frac{f_{max} - f_{min}}{P_{max} - P_{min}},$$

wobei $V_{max}$ eine maximal zulässige Spannung an den Wandlerausgängen ist, $V_{min}$ eine minimal zulässige Spannung ist, $P_{max}$ eine maximal zulässige Wirkleistung ist, $P_{min}$ eine minimal zulässige Wirkleistung ist, $f_{max}$ eine maximal zulässige Frequenz ist, $f_{min}$ eine minimal zulässige Frequenz ist, $Q_{max}$ eine maximal zulässige Blindleistung ist, $Q_{min}$ eine minimal zulässige Blindleistung ist.

12. Wandler (1), der dafür ausgelegt ist, an zumindest ein Photovoltaikpanel (2) und an zumindest eine Batterie (3) angeschlossen zu werden, um zumindest einen Abnehmer zu versorgen, und der ein Hochfrequenz-Kommunikationsmodul (16) und eine Verarbeitungseinheit (7) umfasst, in welcher das Synchronisationsverfahren nach einem der Ansprüche 1 bis 11 ausgeführt wird.

13. Computerprogramm, das Befehle umfasst, welche die Verarbeitungseinheit (7) des Wandlers (1) nach Anspruch 12 dazu veranlassen, die Schritte des Synchronisationsverfahrens nach einem der Ansprüche 1 bis 11 auszuführen.

14. Computerlesbares Speichermedium, auf welchem das Computerprogramm nach Anspruch 13 abgespeichert ist.

## Claims

1. A synchronization method implemented in a converter system (26) that comprises a plurality of converter clusters (25), each converter cluster comprising converters (1) that are grouped together locally, each converter being connected to at least one photovoltaic panel (2) and to at least one battery (3) for powering at least one subscriber, all of the converters including a respective output (18) connected to a common power bus (10) such that the converter clusters are connected in parallel with one another by being connected to said power bus, each converter cluster including at least one RF communication module (16) for communicating with other converter clusters, the synchronization method comprising the steps of:

· causing the converter clusters (25) to use their RF communication modules regularly to exchange values of at least one global operating parameter, each value being associated with a respective distinct converter cluster;
· defining a master converter cluster dynamically and in real time from the global operating parameter values;
· acquiring a configuration parameter that is representative of a connection configuration in which the converter system (26) is to be found and that depends on at least one external power source (28, 29, 30) potentially connected to the converter system, and on a type of said external power source;
· causing the master converter cluster to implement a global control algorithm for synchronizing the converter clusters with one another and for managing global power flows between them, the global control algorithm being defined as a function of the configuration parameter.

2. A synchronization method according to claim 1, wherein, the global operating parameter for each converter cluster (25) is a global state of charge representative of the states of charge of the batteries (3) connected to the converters (1) of said converter cluster, the master converter cluster being the converter cluster that is associated with the greatest value for the global states of charge.

3. A synchronization method according to either preceding claim, further comprising, for each converter cluster (25), the steps of:

· defining a local master converter of said converter cluster dynamically and in real time on the basis of the values of at least one local operating parameter, each of which values is associated with a respective distinct converter of said converter cluster;
· causing the local master converter to implement a local control algorithm serving to synchronize the converters of said converter cluster with one another and to manage local flows of power between them.

4. A synchronization method according to claim 3, wherein the global control algorithm is implemented by the local

**EP 4 203 224 B1**

master converter of the master converter cluster.

5. A synchronization method according to claim 4, wherein, for each converter, the local operating parameter is the state of charge of the battery connected to said converter, the local master converter of said converter cluster being the converter that is associated with the greatest value for the states of charge.

6. A synchronization method according to any preceding claim, wherein, when the connection configuration is a first connection configuration in which no external power source is connected to the converter system (26), the global control algorithm comprises the steps of:

· determining whether the greatest value for the global state of charge is less than or equal to a minimum threshold;

· if not, operating the converters by using droop control; or else
· if so, disconnecting the converter system from the subscribers.

7. A synchronization method according to any one of claims 1 to 5, wherein, when the connection configuration is a second connection configuration in which a generator (28) can potentially be connected to a particular converter cluster, the global control algorithm comprises the steps of:

· determining whether the greatest value for the global states of charge is less than or equal to a minimum threshold;

· if not, operating the converters by using droop control; or else
· if so, using external power delivered by the generator by synchronizing the outputs of the converters on an external voltage produced by the generator, and then, once the batteries connected to the converters of the converter clusters are recharged, disconnecting the particular converter cluster from the generator and operating the converters by using droop control.

8. A synchronization method according to any one of claims 1 to 5, wherein, when the connection configuration is a third connection configuration in which an external power grid (29) or a generator (28) can potentially be connected to a particular converter cluster, or a fourth connection configuration in which an external power grid or a generator can potentially be connected to a particular converter cluster and a photovoltaic inverter (30) can potentially be connected to the power bus, the global control algorithm comprises the steps of:

· determining whether the greatest value for the global states of charge is less than or equal to a minimum threshold; and, if so:

· if the generator is connected to the particular converter cluster, using first external power delivered by the generator by synchronizing the outputs of the converters on a first external voltage produced by the generator, and then, once the batteries connected to the converters of the converter clusters are recharged, disconnecting the particular converter cluster from the generator and operating the converters by using droop control; or else
· if the generator is not connected to the converter cluster, but the external power grid is connected to the particular converter cluster, using second external power delivered by the external power grid by synchronizing outputs of the converters on a second external voltage induced by the external power grid.

9. A synchronization method according to claim 8, wherein if the greatest value for the global states of charge is greater than the minimum threshold, the global control algorithm further comprises the steps of determining whether the greatest value for the global states of charge is greater than or equal to a maximum threshold, and:

· if not, operating the converters by using the predefined form of control;
· if so, and if the external power grid is connected to the particular converter cluster, injecting surplus energy coming from the batteries into the external power grid.

10. A synchronization method according to claim 8 or claim 9, wherein, if no photovoltaic inverter (30) is connected to the power bus (10), then the predefined form of control is droop control, and if a photovoltaic inverter (30) is connected to the power bus (10), then the predefined form of control is frequency shift control.

30

11. A synchronization method according to any one of claims 6 to 10, wherein the droop control uses coefficients n and m such that:

· if the output impedance of the converters is purely resistive; then

$$n \ = \ \frac{V_{max}-V_{min}}{P_{max}- P_{min}};$$

$$m \ = \ \frac{f_{max}-f_{min}}{Q_{max}- Q_{min}};$$

· if the output impedance of the converters is purely inductive; then

$$n \ = \ \frac{V_{max}-V_{min}}{Q_{max}- Q_{min}};$$

$$m \ = \ \frac{f_{max}-f_{min}}{P_{max}- P_{min}};$$

where $V_{max}$ is a maximum acceptable voltage at the output from the converters, $V_{min}$ is a minimum acceptable voltage, $P_{max}$ is a maximum acceptable active power, $P_{min}$ is a minimum acceptable active power, $f_{max}$ is a maximum acceptable frequency at the output from the converters, $f_{min}$ is a minimum acceptable frequency, $Q_{max}$ is a maximum acceptable reactive power, and $Q_{min}$ is a minimum acceptable reactive power.

12. A converter (1) arranged to be connected to at least one photovoltaic panel (2) and to at least one battery (3) in order to power at least one subscriber, and including a RF communication module (16) and a processor unit (7) in which there is implemented the synchronization method according to any one of claims 1 to 11.

13. A computer program including instructions that cause the processor unit (7) of the converter (1) according to claim 12 to execute the steps of the synchronization method according to any one of claims 1 to 11.

14. A computer-readable storage medium storing the computer program according to claim 13.

Fig. 1

Fig. 2

Fig. 3

Fig. 4

Fig. 5

Fig. 6

Fig. 7

Fig. 8

Parallel AC Bus

Multi-cluster

Global master definition

Start —— E100

Star SGC wireless
communication —— E101

Get clusters number (n) —— E102

Exchange SOC informations
between clusters
SOC_clusters (n)(i) —— E103

E104

SOC_clusters (i) >
SOC_clusters (n)(i)

yes                                        no

K_index_master=1
Send master index —— E107

E105 —— K_index_master=0
Send master index

Launch global master
control algorithm —— E108

E106 —— Launch local master
control algorithm

Fig. 9

```
                    ┌─────────┐
                    │  Start  │───── E200
                    └────┬────┘
                         │
            ┌────────────▼──────────────────┐
  E201 ─────│ fin(i), vin(i), ang in(i), Phin(i), fout(i), │◄──────────────┐
            │     vout(i), angout(i), Phout(i)   │                          │
            └────────────┬──────────────────┘                               │
                         │                                                  │
                         ▼                            E203                  │
            ╱────────────────────────╲         ┌──────────────────────┐     │
           ╱ f_grid_min ≤ fin(i) ≤ f_grid_max╲  │   ke_crt (i) = 0     │     │
          ⟨              &               ⟩─no─►│ Disconnect from the input grid │
           ╲ v_grid_min ≤ vin(i) ≤ v_grid_max ╱  └──────────┬───────────┘     │
            ╲────────────────────────╱                      ▲                │
                         │ yes                              │                │
                         ▼                                  │ yes            │
            ╱────────────────────────╲                      │                │
           ╱ fin(i)-fin(i-1)≥2Hz & i-(i-1)=0.5s ╲            │                │
          ╱           or                ╲                    │                │
         ⟨ fin(i)-fin(i-1)≥1.5Hz & i-(i-1)=1s ⟩───────────────┘               │
          ╲           or                ╱  E204                               │
           ╲ fin(i)-fin(i-1)≥1.25Hz & i-(i-1)=2s ╱                            │
            ╲                          ╱                                      │
             ╲ *VDE-AR-N 4105 p.26 : 5.7.1 ╱                                  │
              ╲────────────────────────╱                                     │
                         │ no                                                │
                         ▼                                                   │
  E205 ─── ┌────────────────────────────────┐◄────────────┐                  │
           │ Adjust central grid synchronization parametres │              │                  │
           └────────────┬───────────────────┘             │                  │
                         │                            E206 │ no               │
                         ▼                                 │                  │
            ╱────────────────────────────────╲            │                  │
           ╱ Abs(vin(i)-vout(i))≤voltage_synchronization_limit ╲             │                  │
          ╱              &                    ╲               │                  │
         ⟨ Abs(fin(i)-fout(i))≤frequency_synchronization_limit ⟩──────────────┘                  │
          ╲              &                    ╱                                │
           ╲ Abs(ang(i)-angout(i))≤phase_ang_synchronization_limit ╱          │
            ╲            &                   ╱                                 │
             ╲    Phin(i)=Phout(i)          ╱                                  │
              ╲                            ╱                                   │
               ╲ *IEEE Standard C50.12-2005 ╱                                 │
                ╲────────────────────────╱                                    │
                         │ yes                                                │
                         ▼                                                    │
            ┌────────────────────────┐                                        │
            │   ke_crt (i) = 1       │─── E207                                │
            │ Sychronize with the input grid │────────────────────────────────┘
            └────────────────────────┘
```

Fig. 10

```
                    ┌─────────┐
                    │  Start  │───E300
                    └────┬────┘
                         │
         E301 ╲    ┌──────▼──────┐
              ╲────┤   fin(i)    ├──────────────────────────┐
         ┌─────────┤   vin(i)    │◄───────────────────────┐ │
         │         └──────┬──────┘                        │ │
         │                │                               │ │
         │       ┌────────▼─────────┐                     │ │
         │       │  K_contact_GE=1  │──E302               │ │
         │       │"Close the dry contact"│                │ │
         │       └────────┬─────────┘                     │ │
         │                │                               │ │
         │                │                    E303       │ │
         │       ┌────────▼──────────────────┐  ╱         │ │
         │      ╱ f_grid_min ≤ fin(i) ≤ f_grid_max ╲      │ │
         │     ╱            &                 ╲ no  ┌──────▼─────────┐
         │     ╲ v_grid_min ≤ vin(i) ≤ v_grid_max ╱─►│ GE_presence=0  │
         │      ╲                          ╱         │"The GE is not present"│
         │       └──────────┬─────────────┘         └───────┬────────┘
         │                  │ yes                           │
         │                  │                            E305
         │       ┌──────────▼───────┐
         └───────┤  GE_presence=1   │──E304
                 │ "The GE is present" │
                 └──────────────────┘
```

Fig. 11

```
                    ┌─────────┐
                    │  Start  │───E400
                    └────┬────┘
                         │
         E401      ┌──────▼──────────────────────┐
              ╲────┤  Get SGC unit numbers(n),    │
          ┌─────── │ get SOC(n)(i), SGC_battery_capacity(n) │◄──┐
          │        └──────────────┬───────────────┘           │
          │                       │                           │
          │        ┌──────────────▼───────────────────────┐   │
          │ E402   │            ___  SGC_battery_capacity(n)│   │
          │   ╲────┤  sum(i) =   ╲   ──────────────────── X SOC(n)(i) │
          │        │            /__  total_cluster_capacity │   │
          │        └──────────────┬───────────────────────┘   │
          │                       │                           │
          │        ┌──────────────▼───────────────┐           │
          │ E403 ──┤    SOC_clusters(i)=sum(i)/n   │           │
          │        └──────────────┬───────────────┘           │
          │                       │                           │
          │        ┌──────────────▼───────┐                   │
          │ E404 ──┤       t=t+Δt          ├───────────────────┘
                   └───────────────────────┘
```

$$sum(i) = \sum \frac{SGC\_battery\_capacity(n)}{total\_cluster\_capacity} \times SOC(n)(i)$$

$$SOC\_clusters(i) = sum(i)/n$$

$$t = t + \Delta t$$

Fig. 12

Fig. 13

Fig. 14

$$E = E^* - nP$$

$$\omega = \omega^* + mQ$$

Capacitive  Inductive

Fig. 15

Fig. 16

| |
|---|
| Parallel AC Bus |
| Multi-cluster |
| Global master control algorithm |
| Isolated multi-clusters control algorithm |

Start — E600

Get clusters number (n)
Get SOC_cluster(n) (i) — E601

Calculate SOC_cluster_global(i)
"launch global SOC calculation algorithm" — E602

SOC_cluster_global(i)≤SOC_min — E603

yes

Control_index=1
Disconnect mini grid
"All Ks(n)=0" — E604

no

Droop control algorithm
Droop_control_index=1
Grid former/follower_Frequency_shift_control_index=0
Control_index=0 — E605

Fig. 17

Grid/GE — 28, 29

Inverter mode

Charger mode

30

P

P

DROOP CONTROL

Fig. 18

Fig. 19

Fig. 20

Fig. 21

Fig. 22

Fig. 23

Fig. 24

Fig. 25

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3726698 A1